# EUROPÄISCHE PATENTANMELDUNG

(11) **EP 4 752 087 A1**
(43) Veröffentlichungstag der Anmeldung: **03.06.2026**
(21) Anmeldenummer: 25210350.2
(22) Anmeldetag: 22.10.2025
(51) Int. Cl.: B65G 23/44

(54) **FÖRDERVORRICHTUNG UND VERFAHREN ZUM FÖRDERN VON STÜCKGUT AUF EINER AUFLAGE**

(30) Priorität: 27.11.2024 DE 102024135026
(71) Anmelder: Krones Aktiengesellschaft, 93073 Neutraubling (DE)
(72) Erfinder: BEER, Erhard, 93073 Neutraubling (DE); EHBERGER, Marco, 93073 Neutraubling (DE); HARTL, Michael, 93073 Neutraubling (DE); KOLLMUSS, Manuel, 93073 Neutraubling (DE); SCHUETT, Florian, 93073 Neutraubling (DE); SPORNRAFT, Lena, 93073 Neutraubling (DE); UNTERSEHER, Josef, 93073 Neutraubling (DE)
(74) Vertreter: Benninger, Johannes

(57) **Zusammenfassung**

Es sind eine Fördervorrichtung (10) zum Stückguttransport auf einer sich in einer Förderrichtung (14) bewegenden Auflage (16) sowie ein Verfahren zum Fördern von Stückgut (12) auf einer sich in Férderrichtung (14) bewegenden Auflage (16) offenbart.

Die Auflage (16) ist durch ein Zugtrum (18) eines endlos umlaufenden Zugmittels (20) bereitgestellt, Das Zugmittel (20) weist ein gegen die Förderrichtung (14) und unterhalb der Auflage (16) zurücklaufendes Leertrum (26) mit einer dort angeordneten und einen Durchhang des Leertrums (26) regulierenden Spannvorrichtung (32) auf. Die Spannvorrichtung (32) umfasst eine beweglich gelagerte Spanneinheit (38) mit einem Kontaktelement (40), das mit dem Leertrum (26) in Kontakt steht. Das Leertrum (26) wird unter Einwirkung der Gewichtskraft (44) der beweglich gelagerten Spanneinheit (38) vorgespannt. Der Spanneinheit (38) ist ein Feststellungsmechanismus zur lösbaren Blockade eines Rückhubs der Spanneinheit (38) entlang des Verstellweges (36) entgegen der Richtung der Gewichtskraft (44) zugeordnet.

## Beschreibung

Die vorliegende Erfindung betrifft eine Fördervorrichtung zum Stückguttransport sowie ein Verfahren zum Fördern von Stückgut auf einer sich in einer Förderrichtung bewegenden Auflage.

Die vorliegende Erfindung befasst sich mit einer Spannvorrichtung für einen umlaufend geführten Zugmittelantrieb, welcher insbesondere ein zur Beförderung von Stückgütern vorgesehener Bestandteil einer Getränkeabfüll-, Handhabungs- und/oder Verpackungsmaschine sein kann. Die Spannvorrichtung ist wiederum Bestandteil dieses Zugmittelantriebes, der wenigstens ein über Umlenkungen geführtes Zugmittel für eine Förder- oder Antriebseinheit innerhalb der Getränkeabfüll-, Handhabungs- und/oder Verpackungsmaschine umfasst.

Bei Zugmittelantrieben werden rotierende Bewegungen zwischen voneinander entfernten Wellen mittels umlaufender Zugmittel wie Riemen, Gliederketten, Mattenketten oder dergleichen übertragen. Während ein kraftübertragenes Zugtrum oder Lasttrum eines solchen Zugmittelantriebes aufgrund der dort in aller Regel stetig anliegenden Zugkräfte gespannt bleibt, ist dies im lastfreien oder lastarmen Leertrum, das den rücklaufenden Abschnitt des normalerweise endlos umlaufenden Zugmittels bezeichnet, nicht zuverlässig zu gewährleisten, so dass dort zur Verhinderung eines unerwünschten Durchhanges und damit möglicherweise einhergehender unkontrollierter Querbewegungen und Schwingungen des Zugmittels im Leertrum geeignete Spanneinrichtungen eingesetzt werden.

Solche Spanneinrichtungen können in einfachen Bauausführungen durch federnden Gummielementen o. dgl. gebildet sein, bei denen die Spannkraft bspw. durch Verdrehen einer Vierkantwelle gegen elastische Gummielemente erzeugt wird. In vielen Fällen werden zudem federbelastete Spannrollen eingesetzt, die zudem bedarfsweise mit geeigneten Dämpfungselementen ausgestattet sein können, die in der Lage sind, Schwingungen und auftretende unerwünschte Resonanzen zu unterdrücken.

Sofern es sich nicht um hydraulisch vorgespannte oder mit Federelementen ausgestattete und solchermaßen andrückbare Kettenspanner handelt, ist in der Regel eine wiederholte Einstellung der Ketten- oder Zugmittelspannung mittels eines im Leertrums des Zugmittelantriebes befindlichen und manuell in seiner Position veränderlichen Spannelementes notwendig, da die meisten Zugmittel nach längerer Betriebsdauer einem Verschleiß und einer gewissen Längung unterliegen.

Bei Förder- oder Horizontalfördereinrichtungen, die mit gummierten oder anderweitig beschichteten Mattenketten o. dgl. als Zugmittel ausgestattet sind, können sich mehrere Spannelemente sowohl im Lasttrum als auch im Leertrum befinden, da durch einen Staudruck der auf dem oberseitigen Lasttrum beförderten Stückgüter, als auch durch deren Beschleunigung unterschiedliche Lastfälle auftreten können. Als nachteilig hat es sich hierbei erwiesen, dass bei einer Kettenlängung die Kettenspannung entsprechend der Federkennlinie der verwendeten Kettenspanner sinkt und ab einem gewissen unteren Grenzwert der Spannkraft keine einwandfreie Kettenspannung mehr zu gewährleisten ist. Hierdurch kann es zu Fehlfunktionen kommen, was sich etwa in einem Überspringen der Kette ausdrücken kann. Um diese Fehlfunktionen zu vermeiden, muss die Kette nachgespannt oder gekürzt werden, so dass wieder eine ausreichende Kettenspannung gewährleistet werden kann. Die Einstellung der Spannkraft kann in solchen Fällen über eine Skala einer Winkel-Verdrehung des verwendeten Kettenspanners erfolgen, was entsprechende Erfahrung und Kenntnisse der Wartungspersonen voraussetzt.

Automatische Kettenspanner sind in verschiedenen Ausführungsvarianten bekannt, etwa aus der EP 2 990 688 B1 oder aus der EP 184 035 A1.

Das Ziel der vorliegenden Erfindung besteht darin, eine Fördervorrichtung mit einem umlaufenden Zugmittel mit einem robusten und vorzugsweise selbsttätig für eine vorgebbare Zugmittelvorspannung sorgenden Spannmechanismus auszustatten, der nicht nur flexibel mit unterschiedlichen auftretenden Lastfällen umgehen können soll, sondern der die vorgegebene Zugmittelvorspannung auch nach längerer Betriebsdauer und bei auftretenden Verschleißeffekten aufrechterhalten kann. Zudem besteht ein weiteres Ziel der vorliegenden Erfindung darin, ein verbessertes Verfahren zum Fördern von Stückgut auf einer sich in einer Förderrichtung bewegenden Auflage zur Verfügung zu stellen, bei dem die unterhalb der Transportebene zurückgeführte Auflage gleichmäßig gespannt werden kann, ohne dass hierzu weitere Einstellmaßnahmen oder Anpassungen nach längerer Betriebsdauer erforderlich sein sollen.

Diese Ziele der Erfindung werden mit den Gegenständen der unabhängigen Ansprüche erreicht. Weitere vorteilhafte Ausgestaltungen werden durch die jeweiligen abhängigen Ansprüche beschrieben.

Zur Erreichung des genannten Ziels schlägt die vorliegende Erfindung eine Fördervorrichtung zum Stückguttransport auf einer sich in einer Förderrichtung bewegenden Auflage vor, welche durch ein Zugtrum mindestens eines endlos umlaufenden Zugmittels bereitgestellt ist. Das mindestens eine Zugmittel weist ein gegen die Förderrichtung und unterhalb der Auflage zurücklaufendes Leertrum mit einer dort angeordneten und einen Durchhang des Leertrums regulierenden Spannvorrichtung auf. Die Spannvorrichtung umfasst eine Aufhängung und eine der Aufhängung zugeordnete entlang eines Verstellweges beweglich gelagerte Spanneinheit mit einem Kontaktelement, welches Kontaktelelement mit dem Leertrum in Kontakt steht.

Dabei ist vorgesehen, dass das Leertrum unter Einwirkung der Gewichtskraft der beweglich gelagerten Spanneinheit vorgespannt wird, wobei für das Vorspannen ein nicht unbedeutender, wahlweise ein wesentlicher Anteil der Spannkraft auf der auf die Spanneinheit einwirkenden Gewichtskraft beruht. Außerdem ist der Spanneinheit ein Feststellungsmechanismus zur lösbaren Blockade eines Rückhubs der Spanneinheit entlang des Verstellweges entgegen der Richtung zumindest einer Komponente der Gewichtskraft zugeordnet.

Mit der hier gewählten Definition der Zuordnung des Feststellungsmechanismus zur Spanneinheit soll nicht ausgedrückt werden, dass die nachfolgend noch als bevorzugter Bestandteil des Feststellungsmechanismus näher erläuterten Zahnstangen (oder andere Wirkmechanismen) als Teile der Spanneinheit betrachtet werden sollen. Mit dem Begriff der Zuordnung soll vielmehr ein Wirkzusammenhang definiert sein, da die Spanneinheit für die beabsichtigte Wirkungsweise mit dem Feststellungsmechanismus auf eine sinnvolle Weise zusammenwirken soll, ohne dass damit schon ein baulicher oder funktionaler Zusammenhang definiert sein soll.

Bei der Auslegung und Dimensionierung der Spanneinheit ist insbesondere vorgesehen, dass für das Vorspannen mehr als 20% der einwirkenden Kraft von der Gewichtskraft der Spanneinheit herrührt. Eine bevorzugte Ausgestaltung der Fördervorrichtung sieht vor, dass bei der Spanneinheit mehr als 50% der einwirkenden Kraft von der Gewichtskraft der Spanneinheit herrührt. Außerdem kann eine noch bevorzugtere Ausführungsvariante vorsehen, dass mehr als 70% der Kraft von der Gewichtskraft der Spanneinheit rühren.

Die Spannvorrichtung der erfindungsgemäßen Fördervorrichtung ermöglicht eine bedienerunabhängige, automatische und immer annähernd gleich wirkende Vorspannkraft des Zugmittelspanners. Zudem kann eine einzige Spannvorrichtung für die Aufrechterhaltung der erforderlichen Zugmittelspannung auch bei stark wechselnden Lastfällen sorgen, sowie auch bei Änderungen der Laufrichtung des Zugmittels. Das gesamte System arbeitet dabei ohne Hydraulik und dadurch sehr kostengünstig realisierbar. Auch eine automatische Erkennung von Verschleißgrenzen des Zugmittels sind möglich, wie dies weiter unten beschrieben wird.

Bei der Fördervorrichtung kann es insbesondere sinnvoll sein, dass der Verstellweg, um den die Spanneinheit bewegt werden kann, in etwa parallel zur Wirkrichtung der Schwerkraft verläuft. Damit kann gemeint sein, dass die Wirkrichtung der Spannvorrichtung vorzugsweise senkrecht zum Boden verläuft, damit möglichst die komplette Gewichtskraft der Spannvorrichtung für den Spannprozess genutzt werden kann.

Die mechanisch arbeitende Spannvorrichtung arbeitet nach dem Prinzip eines Schwerkraftspanners. Die insbesondere in vertikaler Richtung frei beweglichen Spannrollen oder anders gestalteten Kontaktelemente erzeugen durch ihre Gewichtskraft und die ihrer beweglichen Aufhängungsteile auch bei einem gelängten Zugmittel, gebildet bspw. durch eine Mattenkette, eine gleichbleibende Spannkraft. Ein mechanisch arbeitendes Rastsystem verhindert ein Zurückweichen der Spannvorrichtung bei auftretenden Lastwechseln, wie sie etwa bei Beschleunigungen oder Abbremsvorgängen der beförderten Stückgüter oder auch beim Aufstauen der beförderten Stückgüter auftreten können. Das Rastsystem kann bspw. Sperrklinken umfassen, die eine freie Bewegung in Richtung der Gewichts- oder Schwerkraft erlauben, aber ein Zurückweichen nach oben, d.h. entgegen der Gewichtskraft, verhindern.

Bei der Gestaltung der Spannvorrichtung kann insbesondere ein linearer Verstellweg der Aufhängung sinnvoll sein, wobei der der lineare Verstellweg nach unten verläuft, d.h. in Richtung der Schwerkraft. Allerdings sind auch andere Ausführungsvarianten denkbar, bei denen der Verstellweg zwar ebenfalls linear verläuft, aber einen Winkel mit der senkrecht zum Erdmittelpunkt wirkenden Gewichtskraft einschließt, insbesondere einen spitzen Winkel. Bei einer solchermaßen gestalteten Spannvorrichtung wirkt eine schräge Kraftkomponente der Gewichtskraft, die bspw. durch eine Vektorzerlegung veranschaulicht werden könnte.

Darüber hinaus sind gekrümmte oder bogenförmige Verstellwege denkbar, bei denen jedoch ebenfalls die Gewichtskraft eine wesentliche Komponente der wirksamen Spannkraft bildet.

Das Kontaktelement, das an der Spanneinheit angeordnet ist, kann bspw. eine Gleitfläche zur gleitenden Führung des Zugmittels im Bereich des Leertrums aufweisen. Bei einer solchen Ausgestaltung des Kontakteelementes ist es sinnvoll, dieses mit einer möglichst reibungsarmen Oberfläche auszustatten, das dem darüber gleitenden Zugmittel im Bereich seines Leertrums einen möglichst geringen Reibungswiderstand entgegensetzt. Außerdem sollte das Kontaktelement sinnvollerweise einem geringen Verschleiß durch das ständige Entlang- oder Darübergleiten des Zugmittels unterliegen.

Wahlweise kann das Kontaktelement durch ein im Bereich der Spanneinheit drehbar gelagertes Rotationselement gebildet sein, auf dem das Zugmittel mit seinem Leertrum wälzend geführt ist. Insbesondere kann dieses Rotationselement durch eine zylindrische Walze gebildet sein. Hierbei ist ebenfalls eine Materialauswahl sinnvoll, die eine widerstandsfähige Oberfläche des Rotationselements und damit einen verschleißarmen Betrieb gewährleisten kann. Eine reibungsarme Kontaktierung zum Zugmittel ist allerdings nicht nötig, da das Rotationselement durch das darüber laufende Zugmittel ständig in Rotation versetzt wird, so dass auch eine erhöhte Reibung zum gewünschten Ergebnis führt, ohne dass damit nennenswerte Nachteile verbunden sind.

Bei weiteren Ausführungsvarianten der Fördervorrichtung kann eine Spannwirkung der Spannvorrichtung durch Variation der Gewichte der Spanneinheit und/oder des Kontaktelements beeinflussbar sein. Somit kann die Spannwirkung der Spannvorrichtung bspw. durch eine geeignete Auswahl unterschiedlich schwerer Rotations- oder Gleitelemente bzw. Kontaktelemente angepasst werden.

Darüber hinaus kann es von Vorteil sein, wenn eine Spannwirkung der Spannvorrichtung durch Anbringung von Zusatzgewichten an der Spanneinheit veränderlich ist. Die sinnvolle Dimensionierung solcher optionaler Zusatzgewichte hängt von der gewünschten Spannwirkung ab und kann bspw. durch Versuche ermittelt werden.

Der Feststellungsmechanismus der erfindungsgemäßen Fördervorrichtung kann bspw. einen Rastmechanismus umfassen, der einen Hub entlang des Verstellweges in Richtung der Schwerkraft zulässt und der einen Rückhub in Richtung entgegen der Schwerkraft blockiert. Ein solcher Rastmechanismus kann bspw. mindestens eine Sperrklinke umfassen, die mit einer Verzahnung einer Zahnstange zusammenwirkt und dort rastend eingreift, wobei eine rastende Hubbewegung entlang des Verstellweges in Richtung der Schwerkraft ermöglicht ist und ein Rückhub in Richtung entgegen der Schwerkraft blockiert ist.

Die erfindungsgemäße Fördervorrichtung stellt eine Auflage zur Beförderung von Stückgütern, Artikeln, Verpackungseinheiten, Gebinden etc. zur Verfügung. Diese ebene und beispielsweise eine horizontale Ausrichtung aufweisende Auflage ist durch ein Zugtrum eines endlos umlaufenden Zugmittels bereitgestellt, welches bspw. durch eine Mattenkette, ein elastisches Förderband, ein an der Auflage gummiertes Metallgliederband oder ein anders gestaltetes umlaufendes Förderband einer die Fördervorrichtung bildenden Horizontalfördereinrichtung gebildet sein kann.

Eine solche Fördervorrichtung kann insbesondere in den unterschiedlichsten Abschnitten einer Verpackungsanlage, einer Behälterabfüllanlange oder einer kombinierten Abfüll- und Verpackungsanlage für Behälter eingesetzt werden, wo Stückgüter in größerer Anzahl in definierter Förderrichtung zu transportieren sind, etwa von einem Anlagenmodul zu einem stromabwärts nachgeordneten weiteren Anlagenmodul. Oftmals handelt es sich dabei um sog. Horizontalfördereinrichtungen, mit denen die Stückgüter in horizontaler Förderrichtung auf der Auflage des oberseitig befindlichen Zugtrums des endlos umlaufenden Zugmittels, gebildet bspw. durch die erwähnte Mattenkette, befördert werden, bevor sie an nachgeordnete Anlagenmodule oder weitere Förder- und/oder Handhabungseinrichtungen oder auch an Verpackungsmodule o. dgl. übergeben werden.

Normalerweise sorgen bei derartigen Zugmittelantrieben mehrere Umlenkungen dafür, dass das Zugmittel endlos umlaufen kann, wodurch sich ein gegen die Förderrichtung zurücklaufendes Leertrum des Zugmittels unterhalb der Auflage befindet. Wie schon erwähnt, kann die Förderrichtung bei der erfindungsgemäßen Fördervorrichtung wahlweise auch umgekehrt werden, ohne dass dies die Funktion der Spannvorrichtung beeinträchtigt. Ein Reversierbetrieb ist somit möglich, ohne dass dies die Spannwirkung der Spannvorrichtung beeinträchtigt. Auch stärkere Lastwechsel beim Vorschub des Zugmittels sorgen nicht für Fehlfunktionen bei der Spannvorrichtung.

Unterhalb des die Auflage bereitstellenden Zugtrums oder Lasttrums des Zugmittels können sich zudem das Zugtrum oder Lasttrum der Mattenkette stützende Gleitelemente oder wahlweise ein Auflagetisch o. dgl. befinden, die vorzugsweise eine Gleitebene zur Verfügung stellen, auf deren Oberseite eine Unterseite des Zugmittels bzw. der Mattenkette möglichst widerstandsarm entlanggleiten kann.

Da sich solche Mattenketten, Metallgliederbänder oder andere Förderbänder, die das Zugmittel bilden können, nach längerer Betriebsdauer in aller Regel zumindest geringfügig, ggf. auch in größerem Ausmaß längen, kann ein Durchhang im Leertrum allmählich größer werden, was im vorliegenden Fall nicht durch ein manuelles Nachspannen des Zugmittels oder der Mattenkette ausgeglichen werden muss, denn die Spannvorrichtung arbeitet selbsttätig. Die weitgehend konstante Spannung wird dabei durch Wirkung der Gewichtskraft erzeugt, was neben weiteren Vorteilen den vorteilhaften Effekt einer effektiven Spannwirkung bei beliebigen Laufrichtungen des Zugmittels bietet. Verschleißerscheinungen durch Längung des Zugmittels oder durch Kettenlängung werden automatisch ausgeglichen.

Zudem werden zu starke Spannungen verhindert, da die Gewichtskraft gleichzeitig für eine Begrenzung der Spannwirkung sorgt. Somit ist ein geringer Verschleiß des Zugmittels durch eine optimierte und gleichbleibende Spannung zu gewährleisten. Auf jegliches manuelle Nachspannen kann verzichtet werden.

Auch größere Ketten- oder Zugmittellängungen können ausgeglichen werden, selbst solche mit einer Gesamtlängung von bis zu drei Prozent oder sogar mehr, bezogen auf die Gesamtlänge des Zugmittels oder der Mattenkette. Die erfindungsgemäße Fördervorrichtung, die insbesondere als Horizontalfördereinrichtung ausgebildet sein kann, ist mit einer ggf. sehr langhubig auszulegenden Spannvorrichtung ausgestattet, so dass auch solchen größeren Längungserscheinungen begegnet werden kann.

Die sich im Leertrum des bspw. durch die Mattenkette gebildeten Zugmittels und den Durchhang des Leertrums regulierende Spannvorrichtung kann eine Aufhängung mit einem definierten Verstellweg aufweisen, wobei die Aufhängung eine entlang des Verstellweges beweglich gelagerte Spanneinheit mit einem Kontaktelement umfasst. Was hier als Kontaktelement bezeichnet ist, das mit dem Leertrum in Kontakt steht und dieses in einer Weise spannt, dass der Durchhang ausgeglichen wird, kann bspw. eine an der Spanneinheit drehbar gelagerte Rolle oder Walze mit einer Drehachse sein, die sich unterhalb der Auflage befindet und horizontal und quer zur Förderrichtung ausgerichtet ist.

Vorzugsweise sorgt der komplette bewegliche Teil der Spannvorrichtung für das gewünschte Vorspannen des Zugmittels bzw. der Mattenkette, d.h. die in vertikaler Richtung bewegliche Spanneinheit mitsamt dem dort gelagerten oder aufgehängten Kontaktelement, gebildet bspw. durch die erwähnte rotierbar gelagerte Walze, die für die untere Umlenkung des Zugmittels bzw. der Mattenkette sorgt.

Anstelle der hier beispielhaft genannten drehbar gelagerten Walze kann prinzipiell auch ein anderes passend geformtes und insbesondere in seiner Kontur an den Umlenkwinkel des Zugmittels oder der Mattenkette angepasstes Gleitelement vorgesehen sein, bei dem keine vom darauf abwälzenden Zugmittel verursachte rotierende Eigenbewegung vorgesehen ist, sondern welches eine möglichst reibungsarme gekrümmte Umlenkfläche für das darüber gleitende Zugmittel bzw. die darüber gleitende Mattenkette bietet. Bei Verwendung einer drehbar gelagerten Walze als Kontaktelement ist vorzugsweise die zylindrische Außenkontur und die Oberflächenbeschaffenheit der rotierend gelagerten Walze, die das Kontaktelement bilden kann, weitgehend glatt, so dass die Walze oder das rotierende Kontaktelement keinen formschlüssigen Eingriff in die Kettenglieder der Mattenkette vorsieht oder ermöglicht.

Die Vorspannkraft kann durch Verwendung unterschiedlicher Gewichte, die an der Spanneinheit befestigt werden können, in gewünschter Weise beeinflusst und reguliert werden. Zwar kann bereits das Eigengewicht der Walze für einen wesentlichen Anteil der Gewichtskraft sorgen, doch können Zusatzgewichte diese effektiv wirksame Gewichtskraft in gewünschter Weise verändern. Je nach Vorhandensein, nach Anzahl und/oder der zusätzlichen Masse der auf der Spanneinheit aufgelegten oder dort angebrachten Zusatzgewichte kann jedenfalls die Spanneinheit zu einem Anteil an der gesamten Vorspannkraft für das Zugmittel mitwirken, von der mehr als 20%, bevorzugt jedoch mehr als 50% von der Gewichtskraft der Spanneinheit stammen. Noch bevorzugter kann der Anteil, welcher von der Gewichtskraft der Spanneinheit an der gesamten Vorspannkraft herrührt, mehr als 70% ausmachen.

Wie schon erläutert, kann ein mechanisches Rastsystem ein Zurückweichen des Zugmittel- oder Kettenspanners bei Lastwechseln, etwa durch Verwendung von Klinken, die in eine Verzahnung eingreifen. Hierdurch wird ein Feststellungsmechanismus zur Verfügung gestellt, der für eine Blockade eines Rückhubs der Spanneinheit entlang des Verstellweges entgegen der Richtung der Gewichtskraft sorgen kann. Das Rastsystem oder der Feststellungsmechanismus kann somit dafür sorgen, dass die Spanneinheit mit ihrem Kontaktelement bzw. der Walze durch die Wirkung der Gewichtskraft ungehindert nach unten gezogen werden kann und hierbei lediglich durch die Gegenkraft des entsprechend vorgespannten Leertrums des Zugmittels bzw. der Mattenkette begrenzt wird.

Dagegen ist ein Rückhub der Spanneinheit entlang des Verstellweges entgegen der Richtung der Gewichtskraft blockiert. Eine Ausführungsvariante der vorliegenden Erfindung kann vorsehen, dass diese Blockade manuell lösbar und aufhebbar ist, was bei einer - normalerweise nicht notwendigen - manuellen Korrektur der Zugmittelspannung sinnvoll sein kann, was insbesondere aber bei einem Austausch des Zugmittels oder der Mattenkette durch ein neues und ungelängtes Ersatzteil erforderlich ist.

Der hier so bezeichnete Feststellungsmechanismus kann durch einen geeignet gestuften Rastmechanismus gebildet sein, insbesondere durch eine Variante eines Ratschenmechanismus, in dessen an einer Zahnstange befindliche Raststufen federbelastete Sperrklinken einrasten und somit jeglichen Rückhub entgegen der Richtung der Gewichtskraft verhindern können. Dagegen können die Zahnflanken der Raststufen der Zahnstange in einer Weise geformt sein und mit der federbelasteten Sperrklinke oder den federbelasteten Sperrklinken zusammenwirken, dass bei einer Zugbewegung in Richtung der Gewichtskraft die Sperrklinke von Raststufe zu Raststufe springen kann. Ein Rückhub in die entgegengesetzte Richtung wird jedoch dadurch blockiert werden, dass die Sperrklinke aufgrund der auf sie wirkenden Federkraft nicht aus dem Zwischenraum zwischen benachbarten Raststufen herausgleitet.

Wahlweise kann das Leertrum in sinnvollen Abständen zur Spannvorrichtung über eine weitere Umlenkung oder über mehrere weitere Umlenkungen verfügen, um dem Zugmittel einen gewünschten Verlauf im Leertrum aufzuprägen. Eine dieser weiteren Umlenkungen kann zudem mit einem Antrieb für das Zugmittel oder die Mattenkette ausgestattet sein. Dieser Antrieb ist sinnvollerweise so auszugestalten, dass sich die Konfiguration gleichermaßen für eine umgekehrte Antriebs- und Umlaufrichtung des Zugmittels oder der Mattenkette eignet. Selbst wenn sich die Mattenkette, die das Zugmittel bilden kann, in eine Richtung entgegen der üblichen Förderrichtung bewegt, funktioniert die Spannvorrichtung uneingeschränkt und in gleicher Weise. Der Feststell- und Rastmechanismus sorgt dafür, dass die mittels Gewichtskraft verursachte Zugmittel- oder Mattenkettenspannung unabhängig von ihrer Laufrichtung aufrechterhalten werden kann.

Wahlweise kann die Fördervorrichtung zwei oder mehr parallele Teilabschnitte umfassen, die insbesondere jeweils seitlich aneinandergrenzen und vorzugsweise jeweils identisch aufgebaut sein können, so dass sie gemeinsam die Horizontalfördereinrichtung oder die Fördervorrichtung bilden. Einige Teile solcher Teilabschnitte, die gemeinsam die Fördervorrichtung bzw. die Horizontalfördereinrichtung bilden können, sind nicht nur mit minimalem Abstand nebeneinander angeordnet, sondern können auch teilweise ineinander gebaut sein, was etwa eine über die gesamte Breite beider oder mehrerer Teilabschnitte reichende durchgängige vorderseitige Zugmittelumlenkung sowie ggf. weitere noch zu beschreibende Komponenten der Fördervorrichtung betrifft.

Zur Lagerung des rotierenden Kontaktelementes, gebildet bspw. durch eine am tiefsten Punkt des Leertrums des durch die endlos umlaufende Mattenkette gebildeten Zugmittels angeordnete Walze, kann bspw. ein U-förmig gestalteter Käfig vorgesehen sein, der zudem zur Unterbringung der erwähnten Zusatzgewichte genutzt werden kann. Sofern solche Käfige verwendet werden, können diese bei zwei nebeneinander angeordneten Teilabschnitten der Fördervorrichtung insbesondere jeweils die halbe Gesamtbreite der Fördervorrichtung ausmachen. Diese Anordnung kann sich wahlweise über die gesamte Breite einer solchen Fördervorrichtung oder Horizontalfördereinrichtung erstrecken. Sie kann jedoch auch in doppelter Ausführung vorhanden sein, so dass zwei identisch aufgebaute Aufhängungen für die nebeneinander angeordneten Kontaktelemente vorgesehen sein können.

Die Zahnstangen können mit dem Käfig zur Lagerung der Walzen fest verbunden sein, wobei jeder Käfig insbesondere mit zwei oder mehr Zahnstangen ausgestattet sein kann. Außerdem können den Zahnstangen jeweils geeignete Linearführungselemente zugeordnet sein, deren Positionierung und Funktionsweise in Zusammenwirkung mit den Zahnstangen noch weiter unten zu erläutern sein wird.

Es sei bereits an dieser Stelle darauf hingewiesen, dass die stationär angeordneten Zahnstangen vorzugsweise keinen Bestandteil der Spanneinheit bilden, und dass vorzugsweise auch der Feststellungsmechanismus kein Bestandteil der Spanneinheit ist, sondern allenfalls die beweglichen Teile des Feststellungsmechanismus. D.h., vorzugsweise sollen allenfalls die beweglichen Teile des Feststellungsmechanismus als Teile der Spanneinheit betrachtet werden können.

Jede Zahnstange einer jeden Aufhängung weist mindestens an einer Längsseite eine Verzahnung auf, welche die erwähnten Raststufen zur Verfügung stellt. Wahlweise kann es sinnvoll sein, gegenüberliegende Verzahnungen mit versetzten Rastungen zur Verfügung zu stellen, wodurch eine verfeinerte Abstufung des Rastmechanismus gebildet sein kann. In diese Verzahnungen bzw. in deren Raststufen können die erwähnten Sperrklinken jeweils einrasten. Wahlweise kann jeder Zahnstange zwei Sperrklinken zugeordnet sein, die sich zu beiden vertikalen Schmalseiten befinden, um dort jeweils in die Verzahnungen einzugreifen. Zu diesem Zweck ist jede der Sperrklinken schwenkbar gelagert, so dass eine spitzwinkelig geformte Rastnase zumindest abschnittsweise formschlüssig in jede der Raststufen eingreifen kann. Die beiden Sperrklinken, die einer Zahnstange jeweils zugeordnet sind und die zu beiden Seiten an den jeweiligen Verzahnungen angeordnet und dort schwenkbar gelagert sind, können mittels einer Zugfeder in einer Weise gegeneinander gezogen werden, dass ihre zueinander weisenden Rastnasen in die Verzahnung hineingezogen werden und gegen die Zugkraft der Zugfeder dort herausbewegt werden können, wenn sich die Zahnstange mit der Aufhängung und dem Kontaktelement unter der Wirkung der Gewichtskraft absenken will.

Damit ein solches Herausgleiten der Rastnasen jeder der beiden Sperrklinken aus der jeweiligen Verzahnung an beiden Seiten jeder Zahnstange ungehindert stattfinden kann, kann es von Vorteil sein, die Zahnflanken der Verzahnung nicht symmetrisch zu einer jeweiligen Mittelachse jedes Zahns zu formen, sondern in einer Weise sägezahnartig zu gestalten, dass die oberen Zahnflanken jeweils in etwa horizontal ausgerichtet sind, während die unteren Zahnflanken einen schrägen Winkel von etwa 30° bis etwa 60° zur Horizontalen aufweisen können. Hierdurch ergibt sind in Zusammenwirkung mit einer passend geformten Rastnase jeder der in die Verzahnungen eingreifenden Sperrklinken die Möglichkeiten der weitgehend ungehinderten Absenkung der Aufhängung unter Einwirkung der Gewichtskraft, wobei die schräg geformte und an der jeweiligen schrägen unteren Zahnflanke anliegenden Rastnase jeweils von dieser unteren Zahnflanke abgleiten kann und dabei gegen die Rückstellkraft der Zugfeder aus der Verzahnung herausgedrückt wird.

Zudem kann es von Vorteil sein, die Unterseite jeder Rastnase der Sperrklinken in etwa horizontal abzuflachen, so dass sie auf einer der entsprechend horizontal ausgerichteten oberen Zahnflanken der Verzahnung aufliegen und durch die Zugwirkung der Zugfeder mit ihrer Spitze in den Verzahnungsgrund der Verzahnung hineingezogen werden kann. Die korrespondierenden horizontalen Flächen der Unterseite der Rastnase und der Oberseite der jeweiligen Zahnflanke liefern die gewünschte Sperrwirkung für eine entgegen der Gewichtskraft gerichtete Aufwärtsbewegung der Aufhängung, da für diesen Fall keine zueinander weisenden schrägen Wirkflächen zwischen der Rastnase und den Zahnflanken vorhanden sind, welche die Sperrklinke aus der Verzahnung herausdrücken könnten, so dass diese dort verbleibt und jede Verschiebung der Zahnstange in einer Richtung entgegen der Gewichtskraft effektiv verhindert.

Einige weitere Konstruktionsdetails der Fördervorrichtung sollen nachfolgend beispielhaft erläutert werden, wobei auch andere Gestaltungen oder Varianten denkbar sind, ohne dass im Einzelfall jeweils gesondert darauf aufmerksam gemacht wird. So kann eine vertikale Führung der Spanneinheit der Spannvorrichtung bspw. durch mehrere vertikal angeordnete Führungsstangen unterstützt oder gewährleistet werden, wobei diese Führungsstangen gemeinsam mit korrespondierenden Durchbrüchen in einem Träger- oder Rahmenelemente eine Linearführung für die Aufhängung der Spanneinheit bilden können, wodurch die Spanneinheit gegenüber der Aufhängung entlang des begrenzten Verstellweges in vertikaler Richtung bewegt werden kann.

Die bspw. hohlzylindrischen Durchbrüche können sich dabei in einem Querträger befinden, der ortsfest montiert und zugleich Bestandteil eines Unterbaus oder Rahmens der Fördervorrichtung sein kann. Gegenüber diesem Querträger ist der Käfig mitsamt der daran gelagerten Walze vertikal absenkbar, um unter Einwirkung der Gewichtskraft das Zugmittel zu spannen. Sofern mehrere parallele Teilabschnitte mit gleich aufgebauten Spannvorrichtungen vorhanden sind, ist bei jeder der vorhandenen parallelen Spannvorrichtungen der jeweilige Käfig mit der daran drehbar gelagerten Walze z.B. mit jeweils zwei Zahnstangen ausgestattet, so dass der jeweilige Rastmechanismus und Feststellungsmechanismus durch jeweils diese zwei Zahnstangen mit den ihnen jeweils zugeordneten Sperrklinken gebildet sind. Wahlweise können jedoch auch mehr als zwei Zahnstangen je Spannvorrichtung vorhanden sein. In unmittelbarer Nähe jeder der Zahnstangen kann sich zudem die erwähnte Führungsstange befinden, so dass für die beiden parallelen Spannvorrichtungen insgesamt vier Zahnstangen und auch vier Führungsstangen vorhanden sein können.

Die Sperrklinken können wahlweise schwenkbar am selben Querträger oder Rahmenelement, bspw. an einer Frontseite des Querträgers, gelagert sein, so dass ihre Rastnasen jeweils in die ihnen jeweils zugeordneten Verzahnungen an den gegenüberliegenden Längsseiten der Zahnstangen eingreifen können.

Eine oben schon erwähnte weitere Ausstattungsoption der Spannvorrichtung besteht in einer Variationsmöglichkeit der auf die Spanneinheit wirkenden Gewichtskraft durch die optionale Verwendung von Zusatzgewichten. Die Verwendung oder Nichtverwendung dieser Zusatzgewichte oder die Dimensionierung der Zusatzgewichte erlaubt es, die auf das Zugmittel wirkenden Spannkräfte in gewissen Grenzen zu variieren. Diese Zusatzgewichte können bspw. durch flache Ballastplatten o. dgl. gebildet sein, deren Außenmaße vorzugsweise in etwa an den verfügbaren Raum an den Käfigen mit den daran gelagerten Walzen angepasst sein können, so dass dort wahlweise zumindest eine solche Ballastplatte montiert werden kann, sofern sich dies in Zusammenwirkung mit den Gewichten des jeweiligen Käfigs, der daran oberhalb befindlichen Zahnstangen und Führungsstangen sowie der im Käfig drehbar gelagerten Walzen als notwendig oder zweckmäßig erweist.

Neben der Verwendung der Ballastplatten als Zusatzgewichte bleibt als weitere Möglichkeit der Beeinflussung der auf das jeweilige Zugmittel oder die jeweilige Mattenkette wirkenden Spannkräfte eine Auswahl geeigneter Kontaktelemente, bspw. durch Verwendung verschiedener Materialien für die Walzen, oder durch Einsatz von Vollmaterial anstelle von hohlzylindrischen Walzen zur Erhöhung der wirksamen Gewichtskräfte. Bei der Auswahl unterschiedlicher Materialien für die Walzen spielt insbesondere die Dichte eine Rolle, da bspw. eine Hohlwalze aus einer Aluminiumlegierung wesentlich leichter ist als eine Messingwalze aus Vollmaterial.

Sofern die Zahnstangen mit mehreren Verzahnungen ausgestattet sind, oder sofern mindestens zwei Zahnstangen je Spannvorrichtung eingesetzt werden, kann dies für eine weitere Ausstattungsoption genutzt werden. So ist es etwa möglich, die zu beiden Seiten jeder Zahnstange angeordneten Verzahnungen jeweils in Längsrichtung derart zueinander versetzt anzuordnen, dass die linke und die rechte Seite um eine halbe Zahnteilung zueinander versetzt sind. Dies bewirkt eine feinere Abstufung der Rastungen, da bei jeder Raststufe, bei der z.B. die Rastnase einer der beiden Sperrklinken in einen Zahngrund trifft und dort die oben erläuterte Sperrwirkung gegen einen Rückhub der Spanneinheit in einer Richtung entgegen der Gewichtskraft bewirkt, sich gleichzeitig die Rastnase der jeweils anderen Sperrklinke zwischen zwei benachbarten Zähnen befindet, so dass sich die Verzahnung gegenüber dieser Rastnase noch um einen halben Zahnabstand nach oben bewegen könnte.

Sobald die Gewichtskraft nach einiger Betriebsdauer mit einer einhergehenden fortschreitenden Längung der das Zugmittel bildenden Mattenkette für eine weitere Abwärtsbewegung der Spanneinheit im Rahmen ihres Verstellweges sorgt, bewegt sich diese Sperrklinke, deren Rastnase sich zunächst zwischen zwei benachbarten Zähnen der Verzahnung befand, z.B. um den halben Abstand zweier benachbarter Zähne weiter, wodurch diese Rastnase in den Zahngrund zwischen den benachbarten Zähnen eintaucht, während gleichzeitig die andere Sperrklinke mit ihrer Rastnase aus dem Zahngrund herausgedrückt wird und an ihrer Seite mit der versetzten Verzahnung wiederum zwischen zwei benachbarten Zähnen verharrt.

Der Feststell- und Rastmechanismus kann außerdem mit einem Lösemechanismus ausgestattet sein, der normalerweise gesperrt ist, damit ein Rückhub der Spanneinheit gegen die Wirkung der Gewichtskraft verhindert wird. So können die Sperrklinken bspw. mit Kipphebeln ausgestattet sein, die sich zur Blockade gegen unerwünschtes Herausschwenken der Rastnasen der Kipphebel aus den Verzahnungen der Zahnstangen eignen, wenn sie mit geeigneten Blockiermitteln kombiniert werden.

Da es grundsätzlich sinnvoll ist, eine manuelle Betätigung der Sperrklinken im normalen Betrieb der Fördervorrichtung zu unterbinden, zumal ein Lösen der Vorspannung für das Zugmittel im Wesentlichen nur für den Fall eines Austausches einer verschlissenen und/oder zu stark gelängten Mattenkette in Frage kommen dürfte, kann der Lösemechanismus insbesondere eine aufhebbare mechanische Blockade der Kipphebelbewegungen vorsehen.

Zu diesem Zweck kann sich bspw. unterhalb jedes Kipphebels jeder der Sperrklinken ein Anschlagstift o. dgl. befinden, der den Schwenkweg des jeweiligen Kipphebels zumindest so weit begrenzt, dass dieser lediglich die geringen Schwenkwinkel beim Überstreichen der Rastnasen über die Verzahnung und beim Eintauchen und Herausgleiten jeder Rastnase aus den einzelnen Zähnen bzw. Raststufen dieser Verzahnung ausführen kann. Ein stärkeres Verschwenken kann durch die Anschlagstifte, auf welchen die Kipphebel mit ihren Unterseiten jeweils aufliegen, verhindert werden. Eine gleichzeitige Freigabe aller Sperrklinken kann bspw. dadurch ermöglicht werden, dass die an einer gemeinsamen Trägerwelle verankerten oder anderweitig synchron bewegbaren Anschlagstifte aus ihrem unmittelbaren Eingriff mit den Kipphebeln gebracht werden, indem die Trägerwelle geringfügig um ihre Längsachse verdreht wird, wodurch die Anschlagstifte allesamt von den Unterseiten der Kipphebel der Sperrklinken distanziert werden.

Die beschriebenen Ausführungsvarianten lassen erkennen, dass die erfindungsgemäße Fördervorrichtung in einer weiteren Option wahlweise auch mehrbahnig ausgeführt sein kann. Bei einer solchen mehrbahnigen Ausführung der Fördervorrichtung können geeignete Maßnahmen vorgesehen sein, um unterschiedliche Bandgeschwindigkeiten auszugleichen, die aus unterschiedlichen Banddehnungen resultieren, etwa mittels eines elektronischen Ausgleichs der Antriebsgeschwindigkeiten.

Wahlweise können an geeigneter Stelle der Spannvorrichtung der erfindungsgemäßen Fördervorrichtung geeignete Sensoren eingebaut sein, die insbesondere einer Endpositionserkennung dienen können und somit eine Erfassung der im Betrieb stattfindenden Ketten- oder Zugmittellängung ermöglichen. Durch Verwendung solcher Sensoren kann bei Erreichen der erfassten Endposition erkannt werden, dass die Grenze einer gerade noch akzeptablen Ketten- oder Zugmittellängung erreicht wurde.

Eine solche Endpositionserkennung kann in vorteilhafter Weise mit einer Ausgabe einer Verschleißmeldung verknüpft werden, bspw. durch Übermittlung der Sensorsignale an eine Steuerungseinheit, einer Aufbereitung der Sensorsignale in dieser Steuerungseinheit sowie einer Weiterleitung an weitere Steuerungsglieder und/oder an eine visuelle und/oder akustische Ausgabeeinheit, die Personen, die mit der Überwachung der Anlage betraut sind, die notwendigen Informationen zur Einleitung geeigneter Wartungs- oder Austauschmaßnahmen ermöglicht.

Da auch Längungen unterhalb eines zum Austausch des jeweiligen Zugmittels führenden Wechselvorganges angezeigt werden können, ist es bspw. möglich, auf zukünftig zu erwartende Wechselvorgänge hinzuweisen, was außerdem einen rechtzeitigen Hinweis an ein Materialfluss- und Versorgungssystem ermöglicht, so dass die erneuernden Teile bereits unmittelbar vor dem Wartungsvorgang, bei dem Zugmittel sowie ggf. weitere Verschleißteile auszutauschen sind, bereitgestellt werden können.

Ein besonderer Vorteil einer sensorischen Überwachung der Positionen der Spanneinheiten liegt darin, dass damit auch kritische Endpositionen automatisiert erkannt werden können, so dass die sinnvollen Warnungen ausgegeben werden können, bevor Fehlfunktionen und/oder ein Maschinenstillstand drohen.

Die Sensorsignale können zudem Absolutwerte für die bereits stattgefundene Zugmittel- oder Kettenlängung liefern, da eine Rückrechnung anhand der gemeldeten Positionswerte auf die Zugmittel- oder Kettenlängung möglich ist. Diese sensorische Erfassung der Positionen der Spannvorrichtung sowie die Ermittlung der Zugmittel- oder Kettenlängung bezieht sich gleichermaßen auf ggf. vorhandene parallele Teilabschnitte der Fördervorrichtung, die jeweils mit eigenen umlaufenden Zugmitteln und ihnen zugeordneten Spannvorrichtungen ausgestattet sind.

Bei einer weiteren sinnvollen Ausführungsvariante der Fördervorrichtung kann auch vorgesehen sein, dass ein sich durch eine Zugmittellängung oder Kettenlängung einstellender vertikaler Hub des Kontaktelementes, d.h. insbesondere des Gleitelements oder der drehbaren Walze, von einem initialen Nullpunkt mittels einer geeigneten Sensorik kontinuierlich gemessen wird. Dieser vertikale Hub kann aufgrund seiner Wirkrichtung, die in etwa parallel zur Gewichtskraft verläuft, auch als Z-Hub oder als Hub in Z-Richtung betrachtet werden. Als geeignete Sensorik kann für den genannten Zweck bspw. eine induktiv arbeitende oder eine optisch arbeitende Sensorik eingesetzt werden.

Da ein solcher vertikaler Hub oder Z-Hub normalerweise eine direkte Proportionalität zur sich im laufenden Betrieb allmählich einstellenden Zugmittel- oder Kettenlängung zeigt, kann durch Übermittlung der Sensorwerte an eine übergeordnete Steuerung, bspw. an die schon genannte Steuerungseinheit, und durch der dort stattfindenden Verarbeitung der Sensorwerte auf einfache Weise die Zugmittel- oder Kettenlängung berechnet und damit auch der im Betrieb stattfindende und schon stattgefundene Verschleißgrad der jeweils verwendeten Zugmittel, bspw. der als Zugmittel eingesetzten Mattenkette, ermittelt werden.

Eine solche direkte, kontinuierliche und automatische Erfassung der Zugmittel- und/oder Kettenlängung, die sich im Zusammenhang mit der Auslenkung des Kettenspanners mit der Schwerkraft nach unten zeigt, ermöglicht eine exakte, eine zustandsorientierte und zudem eine vorausschauende Wartung, die es einem Anlagenbetreiber erlaubt, seine sinnvollen und/oder routinemäßig durchzuführenden Wartungsarbeiten besser zu planen. Insbesondere kann der Anlagenbetreiber dadurch einen unnötig frühen Austausch eines nur mäßig gelängten Zugmittels oder einer nur mäßig gelängten Mattenkette vermeiden, zumal bei solchen Austauscharbeiten oftmals auch zahlreiche zugehörige bewegliche Teile wie Kettenräder, Umlenkwalzen etc. mitgetauscht werden.

Insbesondere kann es der Anlagenbetreiber durch eine solche permanente sensorische Überwachung der Zugmittellängung aber auch vermeiden, zu stark verschlissene Teile zu spät zu tauschen und/oder ungeplante Wartungsarbeiten wegen des Erreichens von Verschleißgrenzen durchführen zu müssen, die sich nicht mehr aufschieben lassen. Da solche unaufschiebbaren Austausch- und Wartungsarbeiten in ungünstigen Fällen zu ungeplanten Anlagenstillständen mit einhergehenden finanziellen Folgen führen können, ist eine rechtzeitige und systematische Planung der Wartungsarbeiten mit Hilfe einer ständigen sensorischen Überwachung des Längungsverhaltens des Zugmittels besonders sinnvoll.

Die hier als Variante beschriebene Mehrbahnigkeit der Fördervorrichtung erlaubt es im Zusammenhang mit der erfindungsgemäß ausgestalteten Spannvorrichtung prinzipiell, dass sich die beiden Zugmittel oder Mattenketten der Teilabschnitte ungleich längen können, da sich auch die Spannvorrichtungen der beiden Teilabschnitte trotz ihres normalerweise identischen Aufbaus und identischer Dimensionierung ungleich absenken können. Gewisse unvermeidliche Materialtoleranzen und andere Unwägbarkeiten im Betrieb lassen es zu, dass die Längungen und Verschleißerscheinungen in den parallelen Teilabschnitten ungleich in Erscheinung treten.

Die erwähnten Sensoren können deshalb wahlweise nicht nur die Endpositionen der Spannvorrichtung erkennen, sondern vorzugsweise auch solche ungleichen Absenkwege innerhalb der jeweiligen Verstellwege jedes Teilabschnittes. Somit können die verschiedenen Sensorsignale, die von den Sensoren, die jeweils den Teilabschnitten zugeordnet sind, für eine automatische Ausgleichsregelung der Zugmittel- oder Mattenkettenantriebe genutzt werden, so dass jederzeit ein synchroner Lauf der Zugmittel oder Mattenketten mehrerer Teilabschnitte gewährleistet werden kann.

Hierzu kann die Steuerungseinheit vorzugsweise jeweils passende Steuersignale an Antriebsmotoren für die Antriebe der Zugmittel liefern, wodurch ein präziser Gleichlauf der parallelen Teilabschnitte auch bei unterschiedlichen vertikalen Positionen der jeweiligen Spanneinheiten der Spannvorrichtungen gewährleistet werden kann.

Hinsichtlich dieser beschriebenen Zusammenhänge des optionalen Einsatzes von Sensoren und der optionalen Nutzung und Verarbeitung ihrer Sensorsignale mittels der Steuerungseinheit, die ggf. daraus passende Steuersignale für die Antriebe mehrerer Teilabschnitte der Fördervorrichtung generieren kann, sei an dieser Stelle klargestellt, dass die Steuerungsvorrichtung als sinnvoller Bestandteil der erfindungsgemäßen Fördervorrichtung betrachtet werden kann. Es sei damit klargestellt, dass eine bevorzugte Ausführungsvariante der erfindungsgemäßen Fördervorrichtung, wie sie oben erläutert wurde, über eine solche Steuerungsvorrichtung verfügt, welche somit einen integralen Bestandteil der erfindungsgemäßen Steuerungsvorrichtung bilden kann.

Zur Erreichung des oben genannten Ziels schlägt die vorliegende Erfindung neben der in verschiedenen Ausführungsvarianten beschriebenen Fördervorrichtung weiterhin ein Verfahren zum Fördern von Stückgut auf einer sich in einer Förderrichtung bewegenden Auflage in einer Transportebene mit den nachfolgenden Schritten vor. Die Auflage wird unterhalb der Transportebene zurückgeführt. Die rückgeführte Auflage wird beschwert und dadurch gespannt, und zwar mittels eines Kontaktelementes und wahlweise darüber hinaus mit weiteren, mit dem Kontaktelement verbundenen Teilen, wobei die auf die Auflage durch das Kontaktelement ausgeübte Spannkraft oder Vorspannkraft zu einem Anteil von mindestens 20% durch Gewichtskraft gebildet ist. Außerdem sieht das Verfahren ein Einrasten oder auf andere Weise Festlegen des Kontaktelements oder eines weiteren, mit dem Kontaktelement verbundenen Teils, entlang einer Führung vor.

Hierdurch kann im Wesentlichen eine Rückbewegung entgegen einer Wirkrichtung der Gewichtskraft verhindert werden. Insbesondere kann dadurch ein Rückhub des Kontaktelements in einer Richtung entgegengesetzt zur Wirkrichtung der Gewichtskraft blockiert werden. Diese Blockade ist jedoch vorzugsweise manuell lösbar, etwa für einen Kettenwechsel oder für einen Austausch des Zugmittels, das die endlos umlaufende Auflage bildet.

Bei dem Verfahren kann weiterhin vorgesehen sein, dass eine Spannrichtung der rückgeführten Auflage in etwa parallel zur Wirkrichtung der Schwerkraft verläuft, so dass die Spannrichtung vorzugsweise senkrecht zum Boden verläuft, wodurch möglichst die komplette Gewichtskraft für den Spannprozess genutzt werden kann.

Bei einer sinnvollen Ausführungsvariante des Verfahrens kann die auf die rückgeführte Auflage durch das Kontaktelement ausgeübte Spannkraft im Wesentlichen nur auf der Wirkung der Gewichtskraft beruhen. D.h. bei dieser Variante kann vorgesehen sein, dass die auf die zurückgeführte Auflage wirkende Kraftbeaufschlagung ausschließlich über die Gewichtskraft erfolgt, also ohne zusätzlichen Einsatz einer mechanisch wirkenden Federkraft, einer pneumatisch wirkenden Zusatzkraft oder einer hydraulisch wirkenden Zusatzkraft.

Das Verfahren kann außerdem vorsehen, dass die rückgeführte Auflage auf einer Gleitfläche des Kontaktelements gleitend geführt ist. Alternativ hierzu kann vorgesehen sein, dass die rückgeführte Auflage auf einem das Kontaktelement bildenden Rotationselement wälzend geführt ist.

Weitere Verfahrensvarianten können vorsehen, dass eine auf die rückgeführte Auflage einwirkende Spannkraft durch Variation von Gewichten spannender Komponenten und/oder durch Einsatz von Zusatzgewichten variiert werden kann.

Bei dem Verfahren können darüber hinaus bei einer mehrbahnigen Ausführung Maßnahmen getroffen sein, um unterschiedliche Bandgeschwindigkeiten auszugleichen, die aus unterschiedlichen Banddehnungen resultieren, bspw. durch einen elektronischen Ausgleich der Antriebsgeschwindigkeiten für das Zugmittel bzw. die endlos umlaufende Auflage für den Stückguttransport.

Es sei an dieser Stelle ausdrücklich erwähnt, dass alle Aspekte und Ausführungsvarianten, die im Zusammenhang mit der erfindungsgemäßen Fördervorrichtung erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Fördervorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Fördervorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Fördervorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen in schematischen Seitenansichten jeweils Teilausschnitte einer Ausführungsvariante einer erfindungsgemäßen Fördervorrichtung, die für eine Beförderung von Stückgütern auf einer sich in einer Förderrichtung bewegenden Auflage vorgesehen und entsprechend ausgestaltet ist.
Fig. 2A zeigt in einer schematischen Perspektivansicht einen Teilausschnitt der Fördervorrichtung gemäß Figuren 1A und 1B, die zwei parallel nebeneinander angeordnete Teilabschnitte zur Bildung einer zweibahnigen Stückgutförderung aufweist.
Fig. 2B zeigt die Fördervorrichtung gemäß Fig. 2A in schematischer Frontansicht.
Figuren 3A und 3B zeigt in schematischen und perspektivischen Ansichten weitere Details der Fördervorrichtung.

Für gleiche oder gleich wirkende Elemente der Erfindung verwendet die nachfolgende Figurenbeschreibung in der Regel jeweils gleiche Bezugsziffern. Ferner werden der Übersicht halber in einigen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Fördervorrichtung oder das erfindungsgemäße Verfahren zum Fördern von Stückgut ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

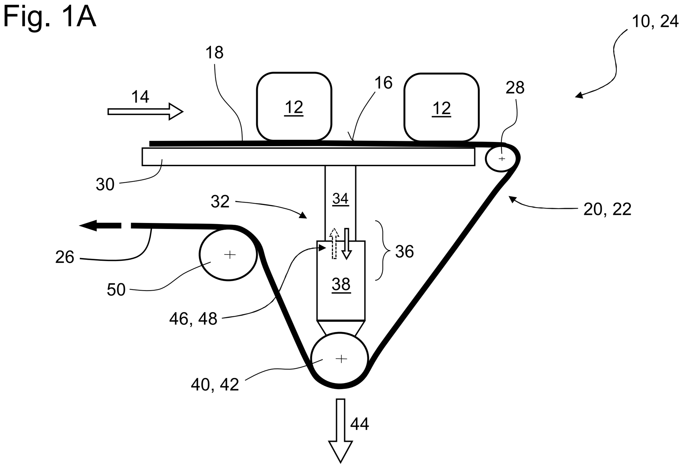

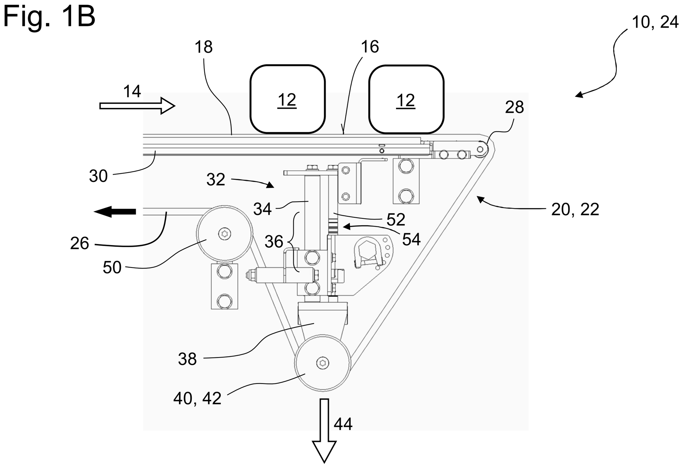

Die schematischen Seitenansichten der Figuren 1A und 1B zeigen jeweils einen Teilausschnitt einer Ausführungsvariante einer erfindungsgemäßen Fördervorrichtung 10, die für eine Beförderung von Stückgütern 12 auf einer sich in einer Förderrichtung 14 bewegenden Auflage 16 vorgesehen und entsprechend ausgestaltet ist. Dabei zeigt die Fig. 1A einige wichtige Komponenten der erfindungsgemäßen Fördervorrichtung 10 und ihr Zusammenwirken, während die Fig. 1B einige Details dieser Komponenten in einer beispielhaften konstruktiven Ausgestaltung erkennen lässt.

Der in den Figuren 1A und 1B gezeigte Teilausschnitt der Fördervorrichtung 10 ist jeweils derselbe. So lassen die Figuren 1A und 1B jeweils die von links nach rechts weisende Förderrichtung 14 der Auflage 16 mit jeweils stehend auf dieser Auflage 16 beförderten Stückgütern 12 erkennen. Diese ebene und im gezeigten Ausführungsbeispiel eine horizontale Ausrichtung aufweisende Auflage 16 ist durch ein Zugtrum 18 eines endlos umlaufenden Zugmittels 20 bereitgestellt, das bspw. durch eine Mattenkette 22, ein elastisches Förderband, ein an der Auflage 16 gummiertes Metallgliederband oder ein anders gestaltetes umlaufendes Förderband einer die Fördervorrichtung 10 bildenden Horizontalfördereinrichtung 24 gebildet sein kann.

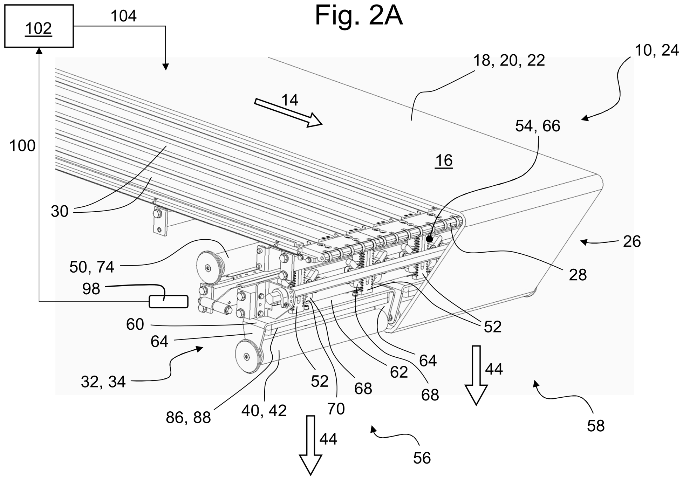

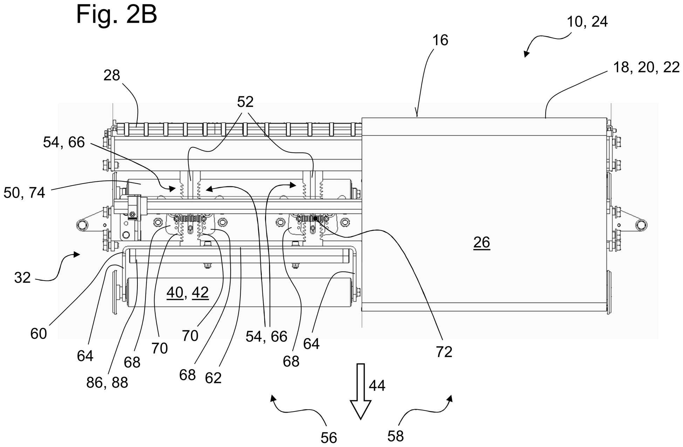

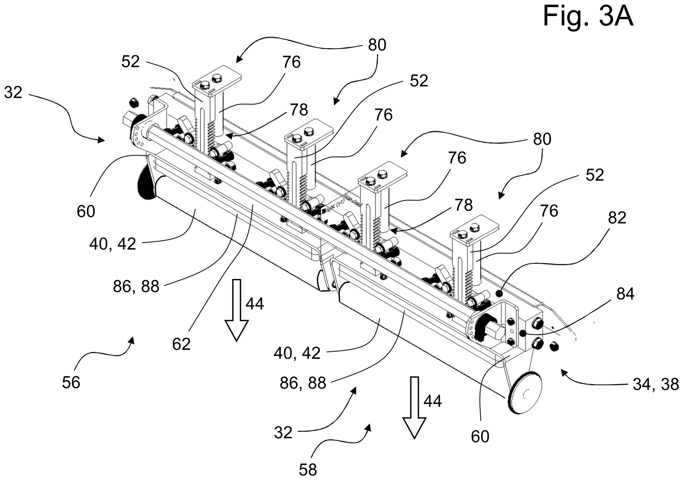

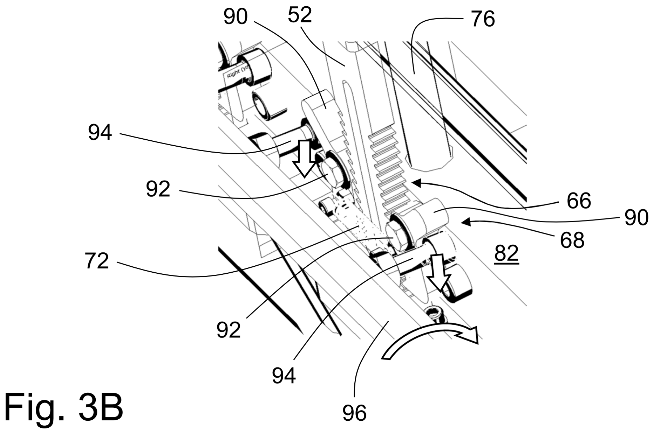

Eine solche Fördervorrichtung 10, wie sie hier in den Figuren 1A und 1B in Teilausschnitten gezeigt sowie anhand der weiteren Figuren 2A, 2B, 3A und 3B in weiteren konstruktiven Details erläutert wird, kann an zahlreichen Stellen einer Verpackungsanlage eingesetzt werden, wo Stückgüter 12 in größerer Anzahl in definierter Förderrichtung 14 zu transportieren sind, etwa von einem Anlagenmodul zu einem stromabwärts nachgeordneten weiteren Anlagenmodul. Oftmals handelt es sich dabei um sog. Horizontalfördereinrichtungen 24, mit denen die Stückgüter 12 in horizontaler Förderrichtung 14 auf der Auflage 16 des oberseitig befindlichen Zugtrums 18 des endlos umlaufenden Zugmittels 20, gebildet bspw. durch die erwähnte Mattenkette 22, befördert werden, bevor sie an nachgeordnete Anlagenmodule oder weitere Förder- und/oder Handhabungseinrichtungen (hier nicht gezeigt) übergeben werden.

Mehrere Umlenkungen sorgen dafür, dass das Zugmittel 20 endlos umlaufen kann, wodurch sich ein gegen die Förderrichtung 14 zurücklaufendes Leertrum 26 des Zugmittels 20 unterhalb der Auflage 16 befindet. Die Laufrichtung des Leertrums 26 entgegen der Förderrichtung 14 ist in den Figuren 1A und 1B jeweils durch einen kleinen Richtungspfeil am Leertrum 26 verdeutlicht. Wie es weiter unten noch erläutert wird, kann die Förderrichtung 14 wahlweise auch umgekehrt werden, ohne dass dies die Funktion der ebenfalls weiter unten erläuterten Spannvorrichtung beeinträchtigt.

Eine vorderseitig am rechten Ende der Auflage 16 angeordnete erste Umlenkung 28 kann bspw. durch eine Walze oder Rolle oder durch mehrere Walzen oder Rollen jeweils geeigneten Durchmessers gebildet sein, wobei die Drehachse der drehbar gelagerten Walze oder Rolle bzw. der Walzen oder Rollen der ersten Umlenkung 28 horizontal und quer zur Förderrichtung 14 angeordnet ist. An dieser vorderseitig befindlichen ersten Umlenkung 28 endet die Auflage 16, da das Zugmittel 20 dort unter die durch das Zugtrum 18 gebildete Auflageebene hinabtaucht.

Unterhalb des die Auflage 16 bereitstellenden Zugtrums 18 des Zugmittels 20 können sich zudem das Zugtrum 18 stützende Gleitelemente 30 oder wahlweise ein Auflagetisch o. dgl. befinden (vgl. hierzu auch die Fig. 2A), die vorzugsweise eine Gleitebene zur Verfügung stellen, auf deren Oberseite eine Unterseite des Zugmittels 20 bzw. der Mattenkette 22 möglichst widerstandsarm entlanggleiten kann.

Da sich solche Mattenketten 22, Metallgliederbänder oder andere Förderbänder, die das Zugmittel 20 bilden können, nach längerer Betriebsdauer in aller Regel zumindest geringfügig, ggf. auch in größerem Ausmaß längen, kann ein Durchhang im Leertrum 26 allmählich größer werden, was durch ein manuelles Nachspannen des Zugmittels 20 oder der Mattenkette 22 ausgeglichen werden könnte. Sofern ein manuelles Spannen des Zugmittels 20 oder der Mattenkette 22 nicht erwünscht ist, lassen sich solche Längungs- und Verschleißerscheinungen wahlweise auch durch geeignete Spannelemente ausgleichen, bspw. durch federbelastete oder durch mit hydraulischem Druck arbeitende Kettenspanner.

Bei der hier gezeigten erfindungsgemäßen Fördervorrichtung 10, die hier als Horizontalfördereinrichtung 24 ausgebildet ist, befindet sich allerdings im Leertrum 26 des bspw. durch die Mattenkette 22 gebildeten Zugmittels 20 eine den Durchhang des Leertrums 26 regulierende Spannvorrichtung 32, die eine Aufhängung 34 mit einem definierten Verstellweg 36 aufweist, wobei die Aufhängung 34 eine entlang des Verstellweges 36 beweglich gelagerte Spanneinheit 38 mit einem Kontaktelement 40 umfasst. Was hier als Kontaktelement 40 bezeichnet ist, das mit dem Leertrum 26 in Kontakt steht und dieses in einer Weise spannt, dass der Durchhang ausgeglichen wird, ist im gezeigten Ausführungsbeispiel eine an der Spanneinheit 38 drehbar gelagerte Rolle oder Walze 42 mit einer Drehachse, die sich unterhalb der Auflage 16 befindet, und die horizontal und quer zur Förderrichtung 14 ausgerichtet ist.

Diese Spannvorrichtung 32 sorgt dafür, dass das Leertrum 26 unter Einwirkung oder unter wesentlicher Mitwirkung einer Gewichtskraft 44 der beweglich gelagerten Spanneinheit 38 vorgespannt wird. Die in senkrechte Richtung nach unten, d.h. in Richtung zum Erdmittelpunkt wirkende Gewichtskraft 44 ist durch einen Richtungspfeil verdeutlicht, der unterhalb des an der Walze 42 umgelenkten Leertrums 26 des Zugmittels 20 ansetzt und mit seiner Spitze nach unten zeigt. Es sei an dieser Stelle darauf hingewiesen, dass der komplette bewegliche Teil der Spannvorrichtung 32 für das gewünschte Vorspannen des Zugmittels 20 bzw. der Mattenkette 22 sorgt, nämlich die in vertikaler Richtung bewegliche Spanneinheit 38 mitsamt dem dort gelagerten oder aufgehängten Kontaktelement 40, gebildet insbesondere durch die erwähnte rotierbar gelagerte Walze 42, die für die untere Umlenkung des Zugmittels 20 bzw. der Mattenkette 22 sorgt.

Anstelle der drehbar gelagerten Walze 42 könnte prinzipiell auch ein passend geformtes und insbesondere in seiner Kontur an den Umlenkwinkel des Zugmittels 20 oder der Mattenkette 22 angepasstes Gleitelement vorgesehen sein, bei dem keine vom darauf abwälzenden Zugmittel 20 verursachte rotierende Eigenbewegung vorgesehen ist, sondern welches eine möglichst reibungsarme gekrümmte Umlenkfläche für das darüber gleitende Zugmittel 20 bzw. die darüber gleitende Mattenkette 22 bietet. Eine solche Ausführungsvariante ist hier jedoch nicht gezeigt.

Bei der stattdessen im gezeigten Ausführungsbeispiel vorgesehenen drehbar gelagerten Walze 42 ist allerdings vorzugsweise die zylindrische Außenkontur und die Oberflächenbeschaffenheit der rotierend gelagerten Walze 42, die das Kontaktelement 40 bildet, weitgehend glatt, so dass die Walze 42 oder das rotierende Kontaktelement 40 keinen formschlüssigen Eingriff in die Kettenglieder der Mattenkette 22 vorsieht oder ermöglicht.

Wie dies anhand der weiter unten zu beschreibenden Figuren 2A, 2B und 3A noch näher verdeutlicht ist, kann die Vorspannkraft durch Verwendung unterschiedlicher Gewichte, die an der Spanneinheit 38 befestigt werden können, in gewünschter Weise beeinflusst und reguliert werden. Zwar kann bereits das Eigengewicht der Walze 42 für einen wesentlichen Anteil der Gewichtskraft 44 sorgen, doch können Zusatzgewichte diese Gewichtskraft 44 in gewünschter Weise verändern.

Je nach Vorhandensein, nach Anzahl und/oder der zusätzlichen Masse der auf der Spanneinheit 38 aufgelegten Zusatzgewichte kann jedenfalls die Spanneinheit 38 zu einem Anteil an der gesamten Vorspannkraft für das Zugmittel 20 mitwirken, von der mehr als 20%, bevorzugt jedoch mehr als 50% von der Gewichtskraft 44 der Spanneinheit 38 stammen. Noch bevorzugter kann der Anteil, welcher von der Gewichtskraft 44 der Spanneinheit 38 an der gesamten Vorspannkraft herrührt, mehr als 70% ausmachen.

Der Spanneinheit 38 ist ein in Fig. 1A nicht genauer spezifizierter Feststellungsmechanismus 46 zugeordnet, der für eine Blockade eines Rückhubs der Spanneinheit 38 entlang des Verstellweges 36 entgegen der Richtung der Gewichtskraft 44 sorgt. Der Feststellungsmechanismus 46 ist in der Darstellung der Fig. 1A lediglich durch gegensinnig gerichtete Doppelpfeile angedeutet, wobei ein mit ausgezogener Linierung gezeichneter Pfeil (rechts) in paralleler Richtung zur Gewichtskraft 44 nach unten weist, was verdeutlichen soll, dass der Feststellungsmechanismus 46 in diese Richtung nicht wirken soll. Die Spanneinheit 38 kann somit mit ihrem Kontaktelement 40 bzw. der Walze 42 durch die Wirkung der Gewichtskraft 44 ungehindert nach unten gezogen werden und wird lediglich durch die Gegenkraft des entsprechend vorgespannten Leertrums 26 des Zugmittels 20 bzw. der Mattenkette 22 begrenzt.

Dagegen weist ein links daneben befindlicher Pfeil mit seiner Pfeilspitze nach oben und damit in die Gegenrichtung der Gewichtskraft 44, was verdeutlichen soll, dass ein Rückhub der Spanneinheit 38 entlang des Verstellweges 36 entgegen der Richtung der Gewichtskraft 44 blockiert ist. Die unterbrochene Linierung dieses Pfeils soll die Blockade dieser Rückhubrichtung veranschaulichen. Allerdings sieht die vorliegende Erfindung vor, dass diese Blockade manuell lösbar und aufhebbar ist, was entweder bei einer manuellen Korrektur der Zugmittelspannung sinnvoll sein kann, was insbesondere aber bei einem Austausch des Zugmittels 20 oder der Mattenkette 22 durch ein neues und ungelängtes Ersatzteil erforderlich ist.

Vorzugsweise kann der hier so bezeichnete Feststellungsmechanismus 46 durch einen geeignet gestuften Rastmechanismus 48 gebildet sein, wie dieser anhand der folgenden Figuren 1B bis 3B noch näher und beispielhaft veranschaulicht ist, insbesondere durch einen Ratschenmechanismus, in dessen an einer Zahnstange 52 befindliche Raststufen 54 eine federbelastete Sperrklinke einrasten und somit jeglichen Rückhub entgegen der Richtung der Gewichtskraft 44 verhindern kann. Dagegen können die Zahnflanken der Raststufen 54 der Zahnstange 52 in einer Weise geformt sein und mit der federbelasteten Sperrklinke zusammenwirken, dass bei einer Zugbewegung in Richtung der Gewichtskraft 44 die Sperrklinke von Raststufe 54 zu Raststufe 54 springen kann. Ein Rückhub in die entgegengesetzte Richtung wird jedoch dadurch blockiert, dass die Sperrklinke aufgrund der auf sie wirkenden Federkraft nicht aus dem Zwischenraum zwischen benachbarten Raststufen 54 herausgleitet.

Die Zahnstange 52 mit einigen wenigen ihrer Raststufen 54 ist in der detaillierter gehaltenen Seitendarstellung der Fig. 1B erkennbar, nicht jedoch die federbelastete Sperrklinke. Die übrigen Komponenten der Fördervorrichtung 10 sowie der zur Vorspannung des bspw. durch die Mattenkette 22 gebildeten Zugmittels 20 vorgesehenen Spannvorrichtung 32 sind in Fig. 1B dieselben wie in der bereits oben beschriebenen Fig. 1A, so dass auf die oben befindlichen Ausführungen verwiesen werden kann.

Auch an dieser Stelle sei darauf hingewiesen, dass die stationär angeordneten Zahnstangen 52 vorzugsweise keinen Bestandteil der Spanneinheit 38 selbst bilden, und dass vorzugsweise auch der Feststellungsmechanismus 46 kein Bestandteil der Spanneinheit 38 ist, sondern allenfalls die beweglichen Teile des Feststellungsmechanismus 46. D.h., vorzugsweise sollen allenfalls die beweglichen Teile des Feststellungsmechanismus 46 als Teile der Spanneinheit 38 betrachtet werden können.

Das Leertrum 26 kann in gewissem Abstand zur Spannvorrichtung 32 über eine weitere Umlenkrolle einer zweiten Umlenkung 50 geführt sein, um dem Zugmittel 20 einen gewünschten Verlauf im Leertrum 26 aufzuprägen. Diese zweite Umlenkung 50 kann wahlweise auch durch eine Antriebsrolle gebildet sein, sofern nicht die erste Umlenkung 28 als Antrieb für das Zugmittel 20 dienen soll. Da allerdings bei der zweiten Umlenkung 50 mehr Platz für die Unterbringung eines Antriebsmotors und/oder einer Antriebsübertragung zur Verfügung steht, kann sich die zweite Umlenkung 50 besser als Antriebsrad oder Antriebsrolle eignen, zumal die erste Umlenkung 28 in aller Regel zur Reduzierung einer Spaltbreite zu nachfolgenden Fördermitteln (hier nicht gezeigt) einen relativ kleinen Durchmesser aufweist.

Ein Vorteil der in den Figuren 1A und 1B gezeigten Anordnung der Fördervorrichtung 10 mit ihren Umlenkungen 28, 40 und 50 für das darüber geführte Zugmittel 20, das insbesondere durch eine Mattenkette 22 o. dgl. gebildet sein kann, besteht darin, dass sich die Konfiguration gleichermaßen für eine umgekehrte Antriebs- und Umlaufrichtung des Zugmittels 20 oder der Mattenkette 22 eignet. Selbst wenn sich die Mattenkette 22, die das Zugmittel 20 bilden kann, in eine Richtung entgegen der in den Figuren 1A und 1B eingezeichneten - von links nach rechts weisenden - Förderrichtung 14 bewegt, funktioniert die dort gezeigte Spannvorrichtung 32 uneingeschränkt und in gleicher Weise. Der nachfolgend näher beschriebene Feststell- und Rastmechanismus 46, 48 sorgt dafür, dass die mittels Gewichtskraft 44 verursachte Zugmittel- oder Mattenkettenspannung unabhängig von ihrer Laufrichtung aufrechterhalten werden kann.

Die schematische Perspektivansicht der Fig. 2A lässt weitere Komponenten des hier gezeigten Ausführungsbeispiels der Fördervorrichtung 10 erkennen, von denen die meisten bereits oben unter Bezugnahme auf die Figuren 1A und 1B erläutert wurden. Der dort gezeigte Teilausschnitt der Fördervorrichtung 10 ist wiederum derselbe wie in den Figuren 1A und 1B. Auf die Darstellung von Stückgütern 12, die auf der Auflage 16 in Förderrichtung 14 (von links oben nach rechts unten weisend) befördert werden, verzichtet die Darstellung der Fig. 2A allerdings, ebenso wie die Darstellung der Fig. 2B.

Die schematische Perspektivansicht der Fig. 2A sowie die schematische Frontansicht der Fig. 2B, die eine Blickrichtung auf die Fördervorrichtung 10 entgegen der Förderrichtung 14 und senkrecht zu dieser sowie senkrecht zur Ebene der Auflage 16 veranschaulicht, lassen außerdem eine Variante mit zwei seitlich aneinandergrenzenden und jeweils identisch aufgebauten Teilabschnitten 56 und 58 der durch die Horizontalfördereinrichtung 24 gebildeten Fördervorrichtung 10 erkennen. Beide Teilabschnitte 56 und 58 bilden gemeinsam die Fördervorrichtung 10 bzw. die Horizontalfördereinrichtung 24, da sie mit minimalem Abstand nebeneinander angeordnet und teilweise ineinander gebaut sind, was etwa die über die gesamte Breite beider Teilabschnitte 56 und 58 reichende durchgängige vorderseitige erste Umlenkung 28 sowie ggf. weitere noch zu beschreibende Komponenten der Fördervorrichtung 10 betrifft.

Die beiden Figuren 2A und 2B lassen zudem den geringen Durchmesser dieser vorderseitigen ersten Umlenkung 28 erkennen, was im Interesse eines möglichst schmalen Spaltes im Übergangsbereich zu einem der Fördervorrichtung 10 nachgeordneten, hier jedoch nicht gezeigten weiteren Fördereinrichtung sinnvoll ist. Allerdings lässt dieser geringe Durchmesser sowie die in den Figuren 2A und 2B erkennbare Gestaltung der ersten Umlenkung 28 kaum Möglichkeiten, diese erste Umlenkung aktiv anzutreiben, so dass ein Antrieb für das Zugmittel 20 an anderer Stelle besser unterzubringen ist, bspw. an der im Leertrum 26 befindlichen zweiten Umlenkung 50.

Um die nachfolgend zu beschreibenden Komponenten der Spannvorrichtung 32 besser erkennbar zu machen, ist beim rechten Teilabschnitt 56 der Fördervorrichtung 10 das Zugmittel 20 weggelassen, während es beim linken Teilabschnitt 58 eingezeichnet ist und dadurch insbesondere im Bereich unterhalb der vorderseitigen ersten Umlenkung 28 einige Bereiche der Spannvorrichtung 32 verdeckt.

Die hier gewählte Begrifflichkeit des linken Teilabschnittes 56 und des rechten Teilabschnittes 58 bezieht sich auf eine Beobachterposition, die sich oberhalb der Auflage 16 befindet und in Förderrichtung 14 blickt. Aus dieser Position betrachtet, fehlt das Zugmittel 20 des rechten Teilabschnittes 56 bei den Darstellungen der Figuren 2A und 2B, auch wenn sich dieser rechte Teilabschnitt 56 aufgrund der umgekehrten Beobachterposition in der Frontansicht der Fig. 2B auf der linken Bildseite befindet. Auch in der Perspektivdarstellung der Fig. 2A befindet sich der rechte Teilabschnitt 56 im Vordergrund und damit im linken Bildbereich.

Die Figuren 2A und 2B lassen die am tiefsten Punkt des Leertrums 26 des durch die endlos umlaufende Mattenkette 22 gebildeten Zugmittels 20 angeordnete Walze 42 erkennen, die in einem U-förmig gestalteten Käfig 60 drehbar gelagert ist, wobei eine oberhalb der die gesamte Breite der Mattenkette 22 einnehmende Walze 42 befindliche Basis 62 dieses Käfigs 60 eine in etwa horizontale Längserstreckungsrichtung aufweist, während zwei an beiden Schmalseiten der Basis 62 gegenüberliegend angeordnete Schenkel 64 im rechten Winkel nach unten weisen und jeweils Lagerstellen für die das Kontaktelement 40 bildende Walze 42 zur Verfügung stellen.

Wie es die Figuren 2A und 2B außerdem erkennen lassen, bezieht sich die beschriebene Anordnung des Käfigs 60, in dem die Walze 42 in horizontaler Ausrichtung drehbar gelagert ist, auf den rechten Teilabschnitt 56, der die halbe Gesamtbreite der Horizontalfördereinrichtung 24 ausmacht. Diese Anordnung kann sich wahlweise über die gesamte Breite einer solchen Fördervorrichtung 10 oder Horizontalfördereinrichtung 24 erstrecken. Sie kann jedoch auch in doppelter Ausführung vorhanden sein, wie dies im gezeigten Ausführungsbeispiel der Fall ist, so dass zwei identisch aufgebaute Aufhängungen 34 für die nebeneinander angeordneten Kontaktelemente 40 vorgesehen sein können.

An einer flachen Oberseite der eine horizontale Ausrichtung aufweisenden Basis 62 des Käfigs 60 befinden sich die schon erwähnten Zahnstangen 52 (vgl. Fig. 1B), die in doppelter Ausführung und beabstandet voneinander angeordnet sind. Diese beiden oberseitig an der Basis 62 angeordneten und dort befestigten Zahnstangen 52 weisen jeweils vertikale Längserstreckungsrichtungen auf und stehen somit auch parallel zueinander. Die sinnvollen Abstände der beiden Zahnstangen 52 jedes der Käfige 60 voneinander richten sich nach der Breite der im Käfig 60 gelagerten Walze 42 und damit auch nach der Länge des Käfigs 60. Die Frontansicht der Fig. 2B lässt eine sinnvolle Anordnung erkennen, bei welcher der Abstand der beiden Zahnstangen 52 voneinander in etwa der halben Länge des Käfigs 60 entsprechen kann, woraus sich eine sinnvolle Positionierung der Zahnstangen 52 in Bezug zum Käfig 60 ergibt.

Den Zahnstangen 52 sind jeweils Linearführungen zugeordnet, deren Positionierung und Funktionsweise in Zusammenwirkung mit den Zahnstangen 52 weiter unten und unter Bezugnahme auf die Figuren 3A und 3B näher erläutert werden soll.

Jede der beiden Zahnstangen 52 jeder Aufhängung 34 weist eine flache Längskontur mit rechteckförmigem Querschnitt auf, wobei die Flachseiten der Zahnstangen 52 jeweils parallel zur Längsseite der Basis 62 des Käfigs 60 liegen, so dass die schmaleren Seiten der Zahnstangen 52 jeweils quer zur Längserstreckungsrichtung der Basis 62 ausgerichtet sind. Jede der beiden Zahnstangen 52 weist entlang ihrer beiden Schmalseiten jeweils eine Verzahnung 66 mit den erwähnten Raststufen 54 auf, wie dies in den Figuren 1B, 2A und insbesondere in der Fig. 2B verdeutlicht ist. Diese linear zu beiden Seiten entlang der Schmalseiten der Zahnstangen 52 verlaufenden Verzahnungen 66 liefern die Raststufen 54, in welche die oben erwähnten Sperrklinken 68 jeweils einrasten können.

Jeder Zahnstange 52 sind zwei Sperrklinken 68 zugeordnet, die sich zu beiden vertikalen Schmalseiten befinden, um dort jeweils in die Verzahnungen 66 einzugreifen. Zu diesem Zweck ist jede der Sperrklinken 68 schwenkbar gelagert, so dass eine spitzwinkelig geformte Rastnase 70 zumindest abschnittsweise formschlüssig in jede der Raststufen 54 eingreifen kann. Die beiden Sperrklinken 68, die einer Zahnstange 52 zugeordnet sind und die zu beiden Seiten an den jeweiligen Verzahnungen 66 angeordnet und dort schwenkbar gelagert sind, werden mittels einer Zugfeder 72 in einer Weise gegeneinander gezogen, dass ihre zueinander weisenden Rastnasen 70 in die Verzahnung 66 hineingezogen werden und gegen die Zugkraft der Zugfeder 72 dort herausbewegt werden können, wenn sich die Zahnstange 52 mit der Aufhängung 34 und dem Kontaktelement 40 unter der Wirkung der Gewichtskraft 44 absenken will.

Damit ein solches Herausgleiten der Rastnasen 70 jeder der beiden Sperrklinken 68 aus der jeweiligen Verzahnung 66 an beiden Seiten jeder Zahnstange 52 ungehindert stattfinden kann, sind die Zahnflanken der Verzahnung 66 nicht etwa symmetrisch zu einer jeweiligen Mittelachse jedes Zahns geformt, sondern in einer Weise sägezahnartig gestaltet, dass die oberen Zahnflanken jeweils in etwa horizontal ausgerichtet sind, während die unteren Zahnflanken einen schrägen Winkel von etwa 30° bis etwa 60° zur Horizontalen aufweisen können. Hierdurch ergibt sind in Zusammenwirkung mit einer passend geformten Rastnase 70 jeder der beiden Sperrklinken 68 die Möglichkeiten der weitgehend ungehinderten Absenkung der Aufhängung 34 unter Einwirkung der Gewichtskraft 44 (vgl. Figuren 1A und 1B), wobei die schräg geformte und an der jeweiligen schrägen unteren Zahnflanke anliegenden Rastnase 70 jeweils von dieser unteren Zahnflanke abgleiten kann und dabei gegen die Rückstellkraft der Zugfeder 72 aus der Verzahnung 66 herausgedrückt wird.

Da zudem die Unterseite jeder Rastnase 70 in etwa horizontal abgeflacht ist, wie dies insbesondere in der Fig. 2B deutlich erkennbar ist, liegt sie auf einer der entsprechend horizontal ausgerichteten oberen Zahnflanken der Verzahnung 66 auf und wird durch die Zugwirkung der Zugfeder 72 mit ihrer Spitze in den Verzahnungsgrund der Verzahnung 66 hineingezogen. Die korrespondierenden horizontalen Flächen der Unterseite der Rastnase 70 und der Oberseite der jeweiligen Zahnflanke liefern die gewünschte Sperrwirkung für eine entgegen der Gewichtskraft 44 gerichtete Aufwärtsbewegung der Aufhängung 34, da für diesen Fall keine zueinander weisenden schrägen Wirkflächen zwischen der Rastnase 70 und den Zahnflanken vorhanden sind, welche die Sperrklinke 68 aus der Verzahnung 66 herausdrücken könnten, so dass diese dort verbleibt und jede Verschiebung der Zahnstange 52 in einer Richtung entgegen der Gewichtskraft 44 effektiv verhindert.

Insbesondere die Figuren 2A und 2B lassen die beiden Zahnstangen 52 mit den ihnen jeweils zugeordneten Paaren von in die beidseitig an den Zahnstangen 52 befindlichen Verzahnungen 66 eingreifenden Sperrklinken 68 erkennen, woraus die gewünschte Verstellbarkeit der Aufhängung 34 mit dem Kontaktelement 40 in die Richtung der Gewichtskraft 44 und außerdem die gewünschte Sperrwirkung in die entgegengesetzte Richtung resultiert.

Hinsichtlich einiger weiterer Komponenten der in den Figuren 2A und 2B gezeigten Ansichten der Fördervorrichtung 10 kann auf die obigen Beschreibungspassagen zu den Figuren 1A und 1B verwiesen werden. So lässt etwa die Fig. 2A die jeweils parallel zur Förderrichtung 14 verlaufenden Gleitelemente 30 erkennen, welche die Gleitauflage für die Mattenkette 22, welche das Zugmittel 20 bilden kann, bilden. Außerdem lassen die Figuren 2A und 2B die Ausbildung der Kontaktelemente 40 erkennen, die hier als drehbare Walzen 42 ausgebildet sind, deren Breite annähernd der Breite der darauf geführten Mattenkette 22 entspricht. Jeder der beiden gezeigten Teilabschnitte 56 und 58 weist einen solchen Käfig 60 als Aufhängung 34 für die drehbare Walze 42 auf, wobei die Käfige 60 und Walzen 42 jeder der beiden parallelen Teilabschnitte 56 und 58 jeweils gleich breit sind.

Zudem lässt die Perspektivansicht der Fig. 2A die Ausgestaltung der zweiten Umlenkung 50 erkennen, die sich in Verlaufs- und Umlaufrichtung der Mattenkette 22 hinter der Spannvorrichtung 32 befindet. Die zweite Umlenkung 50 ist hierbei ebenso durch eine drehbar gelagerte Walze 74 gebildet, deren Durchmesser sowie deren Breite mit der das Kontaktelement 40 der Spannvorrichtung 32 bildenden Walze 42 übereinstimmen kann.

Anhand der schematischen und perspektivischen Detailansichten der Figuren 3A und 3B lassen sich zudem einige weitere Konstruktionsdetails der hier gezeigten Ausführungsvariante der Fördervorrichtung 10 verdeutlichen. So lässt die Perspektivansicht der Fig. 3A mehrere vertikal angeordnete Führungsstangen 76 erkennen, die gemeinsam mit korrespondierenden Durchbrüchen 78 eine Linearführung 80 für die Aufhängung 34 der Spanneinheit 38 bilden, so dass die Spanneinheit 38 gegenüber der Aufhängung 34 entlang des begrenzten Verstellweges 36 (vgl. Figuren 1A und 1B) in vertikaler Richtung bewegt werden kann.

Die hohlzylindrischen Durchbrüche 78 befinden sich in einem Querträger 82, der ortsfest montiert und zugleich Bestandteil eines Unterbaus oder Rahmens (hier nicht gezeigt) der Fördervorrichtung 10 ist. Gegenüber diesem Querträger 82 ist der Käfig 60 mitsamt der daran gelagerten Walze 42 vertikal absenkbar, um unter Einwirkung der Gewichtskraft 44 das Zugmittel 20 zu spannen. Wie es die Fig. 3A erkennen lässt, ist bei jeder der beiden vorhandenen parallelen Spannvorrichtungen 32 der jeweilige Käfig 60 mit der daran drehbar gelagerten Walze 42 mit jeweils zwei Zahnstangen 52 ausgestattet, so dass der jeweilige Rastmechanismus 48 und Feststellungsmechanismus 46 (vgl. Figuren 1A und 1B) durch jeweils diese zwei Zahnstangen 52 mit den ihnen jeweils zugeordneten Sperrklinken 68 gebildet ist. In unmittelbarer Nähe jeder der Zahnstangen 52 befindet sich zudem die erwähnte Führungsstange 76, so dass für die beiden parallelen Spannvorrichtungen 32 insgesamt vier Zahnstangen 52 und auch vier Führungsstangen 76 vorhanden sind.

Während die Zahnstangen 52 an einer vertikalen Frontseite 84 des Querträgers 82 und zumindest geringfügig beabstandet zum Querträger 82 positioniert sind, gleiten die zylindrischen Führungsstangen 76 in den entsprechend dimensionierten hohlzylindrischen Durchbrüchen 78, die sich im Querträger 82 befinden. Die Sperrklinken 68 sind schwenkbar an der Frontseite 84 des Querträgers 82 gelagert, so dass ihre Rastnasen 70 in die ihnen jeweils zugeordneten Verzahnungen 66 an den gegenüberliegenden Längsseiten der Zahnstangen 52 eingreifen können. Die Zugfedern 72, die jeweils die gegenüberliegend angeordneten Paare von Sperrklinken 68 in die Verzahnungen 66 jeweils einer Zahnstange 52 hineinziehen, befinden sich somit an der vom Querträger 82 abgewandten vorderen Flachseite der jeweiligen Zahnstangen 52.

Die Figuren 2A, 2B und 3A lassen eine weitere Ausstattungsoption der Spannvorrichtung 32 erkennen, die in einer Variationsmöglichkeit der auf die Spanneinheit 38 wirkenden Gewichtskraft 44 durch die optionale Verwendung von Zusatzgewichten 86 besteht. Die Verwendung oder Nichtverwendung dieser Zusatzgewichte 86 oder die Dimensionierung der Zusatzgewichte 86 erlaubt es, die auf das Zugmittel 20 wirkenden Spannkräfte in gewissen Grenzen zu variieren.

Diese Zusatzgewichte 86 sind im gezeigten Ausführungsbeispiel durch flache Ballastplatten 88 gebildet, deren Außenmaße in etwa dem verfügbaren Raum unterhalb der Basis 62 jedes der beiden Käfige 60 mit den daran gelagerten Walzen 42 entsprechen, so dass dort wahlweise zumindest eine solche Ballastplatte 88 montiert werden kann, sofern sich dies in Zusammenwirkung mit den Gewichten des jeweiligen Käfigs 60, der daran oberhalb befindlichen Zahnstangen 52 und Führungsstangen 76 sowie der im Käfig 60 drehbar gelagerten Walzen 42 als notwendig oder zweckmäßig erweist.

Wie es die Figuren 2A, 2B und 3A jeweils erkennen lassen, können wahlweise so viele flache Ballastplatten 88 als gemeinsam wirkende Zusatzgewichte 86 unterhalb jeder Basis 62 der beiden Käfige 60 montiert werden, wie zwischen der Unterseite der Basis 62 und der jeweiligen Walze 42 Platz finden. Im gezeigten Ausführungsbeispiel sind dies zwei übereinander gestapelt montierte Ballastplatten 88 in jedem der beiden Teilabschnitte 56 und 58, d.h. in jedem der beiden Käfige 60, in denen unter den Zusatzgewichten 86 jeweils die Walzen 42 angeordnet sind.

Neben der Verwendung der Ballastplatten 88 als Zusatzgewichte 86 bleibt als weitere Möglichkeit der Beeinflussung der auf das jeweilige Zugmittel 20 wirkenden Spannkräfte eine Auswahl geeigneter Kontaktelemente 40, bspw. durch Verwendung verschiedener Materialien für die Walzen 42, oder durch Einsatz von Vollmaterial anstelle von hohlzylindrischen Walzen 42 zur Erhöhung der wirksamen Gewichtskräfte 44. Bei der Auswahl unterschiedlicher Materialien für die Walzen 42 spielt insbesondere die Dichte eine Rolle, da bspw. eine Hohlwalze aus einer Aluminiumlegierung wesentlich leichter ist als eine Messingwalze aus Vollmaterial.

Eine weitere Ausstattungsoption lässt sich am besten anhand der Frontansicht der Fig. 2B erläutern, denn diese Darstellung lässt erkennen, dass die zu beiden Seiten jeder Zahnstange 52 angeordneten Verzahnungen 66 jeweils in Längsrichtung derart zueinander versetzt angeordnet sind, dass die linke und die rechte Seite um eine halbe Zahnteilung zueinander versetzt sind. Dies bewirkt eine feinere Abstufung der Rastungen, da bei jeder Raststufe 54, bei der z.B. die Rastnase 70 einer der beiden Sperrklinken 68 in einen Zahngrund trifft und dort die oben erläuterte Sperrwirkung gegen einen Rückhub der Spanneinheit 38 in einer Richtung entgegen der Gewichtskraft 44 bewirkt, sich gleichzeitig die Rastnase 70 der jeweils anderen Sperrklinke 68 zwischen zwei benachbarten Zähnen befindet, so dass sich die Verzahnung 66 gegenüber dieser Rastnase 70 noch um einen halben Zahnabstand nach oben bewegen könnte.

Sobald die Gewichtskraft 44 nach einiger Betriebsdauer mit einer einhergehenden fortschreitenden Längung der das Zugmittel 20 bildenden Mattenkette 22 für eine weitere Abwärtsbewegung der Spanneinheit 38 im Rahmen ihres Verstellweges 36 sorgt, bewegt sich diese Sperrklinke 68, deren Rastnase 70 sich zunächst zwischen zwei benachbarten Zähnen der Verzahnung 66 befand, z.B. um den halben Abstand zweier benachbarter Zähne weiter, wodurch diese Rastnase 70 in den Zahngrund zwischen den benachbarten Zähnen eintaucht, während gleichzeitig die andere Sperrklinke 68 mit ihrer Rastnase 70 aus dem Zahngrund herausgedrückt wird und an ihrer Seite mit der versetzten Verzahnung 66 wiederum zwischen zwei benachbarten Zähnen verharrt.

Die Frontansicht der Fig. 2B zeigt eine Situation, bei welcher die beiden rechts angeordneten Sperrklinken 68 an den beiden voneinander beabstandeten Zahnstangen 52 des rechten Teilabschnittes 56 (in der Fig. 2B der links befindliche Bereich) der Fördervorrichtung 10 mit ihren Rastnasen 70 jeweils in einen Zahngrund zwischen zwei benachbarten Zähnen der Verzahnung 66 eintauchen, während die beiden links angeordneten Sperrklinken 68 an jeder der beiden Zahnstangen 52 nicht vollständig in den Zahngrund eintauchen können, weil ihre Rastnasen 70 sich jeweils auf halber Höhe einer Zahnstufe oder Raststufe 54 befinden.

Die schematischen Perspektivansichten der Figuren 3A und 3B zeigen schließlich eine einfache Variante eines Lösemechanismus, dessen Wirkungsweise insbesondere anhand der perspektivischen Detailansicht der Fig. 3B erläutert werden soll. Grundsätzlich können zwar die Sperrklinken 68 jeweils gegen die Zugkräfte der ihnen jeweils zugeordneten Zugfedern 72 aus den Verzahnungen 66 der jeweiligen Zahnstangen 52 herausgeschwenkt werden, indem jeweils ein oberseitig an den Sperrklinken 68 befindlicher und jede der Sperrklinken 68 an ihrer den Rastnasen 70 gegenüberliegenden Oberseite verlängernder Kipphebel 90 in Richtung zur jeweiligen Verzahnung 66 gedrückt wird. Die schwenkbare Lagerung jeder Sperrklinke 68 an einem im Querträger 82 verankerten Lagerzapfen 92 ermöglicht eine solche Verschwenkung durch manuelle Betätigung des Kipphebels 90.

Da es jedoch sinnvoll ist, eine solche Betätigung im normalen Betrieb der Fördervorrichtung 10 zu unterbinden, zumal ein Lösen der Vorspannung für das Zugmittel 20 im Wesentlichen nur für den Fall eines Austausches einer verschlissenen und/oder zu stark gelängten Mattenkette 22 in Frage kommen dürfte, sieht das gezeigte Ausführungsbeispiel einen im normalen Betrieb blockierten Lösemechanismus vor, der im Wesentlichen durch eine mechanische Blockade der Kipphebelbewegungen gebildet ist.

Zu diesem Zweck befindet sich unterhalb jedes Kipphebels 90 jeder der Sperrklinken 68 ein Anschlagstift 94, der den Schwenkweg des jeweiligen Kipphebels 90 zumindest so weit begrenzt, dass dieser lediglich die geringen Schwenkwinkel beim Überstreichen der Rastnasen 70 über die Verzahnung 66 und beim Eintauchen und Herausgleiten jeder Rastnase 70 aus den einzelnen Zähnen bzw. Raststufen 54 dieser Verzahnung 66 ausführen kann. Ein stärkeres Verschwenken kann durch die Anschlagstifte 94, auf welchen die Kipphebel 90 mit ihren Unterseiten jeweils aufliegen, verhindert werden.

Eine gleichzeitige Freigabe aller Sperrklinken 68 kann dadurch ermöglicht werden, dass die an einer gemeinsamen Trägerwelle 96 verankerten Anschlagstifte 94 aus ihrem unmittelbaren Eingriff mit den Kipphebeln 90 gebracht werden, indem die Trägerwelle 96 geringfügig um ihre Längsachse verdreht wird, wodurch die Anschlagstifte 94 allesamt unter den Unterseiten der Kipphebel 90 der Sperrklinken 68 wegtauchen. Die Detailansicht der Fig. 3B zeigt die in etwa auf Höhe der Lagerzapfen 92 angeordnete und mit ihrer Längserstreckungsrichtung und Drehachse parallel zum Querträger 82 verlaufende Trägerwelle 96, die somit die gleichzeitige Verschwenkung aller daran befestigten Anschlagstifte 94 ermöglicht, wenn die Trägerwelle 96 verdreht wird.

Die Richtung eines solchen Verdrehens der Trägerwelle 96 um ihre Längsmittelachse ist in der Fig. 3B durch einen gekrümmten Pfeil angedeutet. Ein solches geringfügiges Verdrehen in Pfeilrichtung um wenige Winkelgrade bewirkt ein Verschwenken der senkrecht aus der Trägerwelle 96 herausragenden und in verriegelter Stellung die Kipphebelbewegungen begrenzenden Anschlagstifte 94 und deren Abtauchen unter den Kipphebeln 90 in Richtung der dort jeweils eingezeichneten Pfeile.

Wahlweise können an geeigneter Stelle der Spannvorrichtung 32 geeignete Sensoren 98 eingebaut sein, die einer Endpositionserkennung dienen können und somit eine Erfassung der im Betrieb stattfindenden Ketten- oder Zugmittellängung ermöglichen. Derartige Sensoren 98 finden sich lediglich in der Fig. 2A schematisch angedeutet, während bei den übrigen Figuren auf die schematische Darstellung solcher Sensoren 98 und auf die Darstellung einer Verarbeitung der Sensorsignale 100 verzichtet wurde.

Durch Verwendung solcher Sensoren 98 kann bei Erreichen der erfassten Endposition erkannt werden, dass die Grenze einer gerade noch akzeptablen Ketten- oder Zugmittellängung erreicht wurde. Eine solche Endpositionserkennung kann in vorteilhafter Weise mit einer Ausgabe einer Verschleißmeldung verknüpft werden, bspw. durch Übermittlung der Sensorsignale 100 an eine Steuerungseinheit 102, einer Aufbereitung der Sensorsignale 100 in dieser Steuerungseinheit 102 sowie einer Weiterleitung an weitere Steuerungsglieder und/oder an eine visuelle und/oder akustische Ausgabeeinheit, die Personen, die mit der Überwachung der Anlage betraut sind, die notwendigen Informationen zur Einleitung geeigneter Wartungs- oder Austauschmaßnahmen ermöglicht.

Sinnvollerweise können die Sensorwerte 100 jedoch auch kontinuierlich erfasst und verarbeitet werden, da dies ständige Informationen über einen vertikalen Hub der Spannvorrichtung 32 liefert. Da der vertikale Hub oder Z-Hub direkt proportional zur Kettenlängung ist, kann in der Steuerungseinheit 102 aus den Sensorwerten 100 eine aktuelle Kettenlängung und damit der Verschleißgrad der das Zugmittel 20 bildenden Mattenkette 22 ermittelt werden.

Eine solche direkte, kontinuierliche und automatische Erfassung der Kettenlängung durch ständige sensorische Überwachung der Auslenkung der Spanneinheit 38 mit der Gewichtskraft 44 nach unten ermöglicht eine zustandsorientierte und vorausschauende Wartung der umlaufenden Zugmittel 20, die es jedem Anlagenbetreiber ermöglicht, seine routinemäßigen Wartungsmaßnahmen besser zu planen, so dass die kostenintensiven Verschleißteile Mattenkette 22 und zugehörige Umlenk- und Kettenräder weder zu früh noch zu spät getaucht werden.

Die im hier gezeigten Ausführungsbeispiel vorgesehene Mehrbahnigkeit der Fördervorrichtung 10 erlaubt es im Zusammenhang mit der erfindungsgemäß ausgestalteten Spannvorrichtung 32 prinzipiell, dass sich die beiden Zugmittel 20 oder Mattenketten 22 des rechten Teilabschnittes 56 und des linken Teilabschnittes 58 ungleich längen können, da sich auch die Spannvorrichtungen 32 der linken und rechten Teilabschnitte 58 und 56 trotz ihres identischen Aufbaus und identischer Dimensionierung ungleich absenken können. Gewisse unvermeidliche Materialtoleranzen und andere Unwägbarkeiten im Betrieb lassen es zu, dass die Längungen und Verschleißerscheinungen in den beiden parallelen Teilabschnitten 56 und 58 ungleich in Erscheinung treten.

Die erwähnten geeigneten Sensoren 98 können wahlweise nicht nur die Endpositionen der Spannvorrichtung 32 erkennen, sondern vorzugsweise auch solche ungleichen Absenkwege innerhalb der jeweiligen Verstellwege 36 jedes der beiden Teilabschnitte 56 und 58. Somit können die verschiedenen Sensorsignale 100, die von mindestens zwei solcher Sensoren 98, die jeweils den Teilabschnitten 56 und 58 zugeordnet sind, für eine automatische Ausgleichsregelung der beiden Zugmittel- oder Mattenkettenantriebe genutzt werden, so dass jederzeit ein synchroner Lauf der Zugmittel 20 oder Mattenketten 22 beider Teilabschnitte 56 und 58 gewährleistet werden kann.

Hierzu kann die Steuerungseinheit 102 vorzugsweise jeweils passende Steuersignale 104 an die - hier nicht gezeigten - Antriebsmotoren für die Antriebe der Zugmittel 20 liefern, wodurch ein präziser Gleichlauf der parallelen Teilabschnitte 56 und 58 auch bei unterschiedlichen vertikalen Positionen der jeweiligen Spanneinheiten 38 der Spannvorrichtungen 32 gewährleistet werden kann.

Diese beschriebenen Zusammenhänge des optionalen Einsatzes von Sensoren 98 und der optionalen Nutzung und Verarbeitung ihrer Sensorsignale 100 mittels der Steuerungseinheit 102, die ggf. daraus passende Steuersignale 104 für die Antriebe mehrerer Teilabschnitte 56 und 58 der Fördervorrichtung 10 generieren kann, sind lediglich in der Fig. 2A in schematischer Weise angedeutet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Fördervorrichtung
- 12: Stückgut
- 14: Förderrichtung
- 16: Auflage
- 18: Zugtrum
- 20: Zugmittel
- 22: Mattenkette
- 24: Horizontalfördereinrichtung
- 26: Leertrum
- 28: erste Umlenkung
- 30: Gleitelement
- 32: Spannvorrichtung
- 34: Aufhängung
- 36: Verstellweg
- 38: Spanneinheit
- 40: Kontaktelement
- 42: Walze
- 44: Gewichtskraft
- 46: Feststellungsmechanismus
- 48: Rastmechanismus
- 50: zweite Umlenkung
- 52: Zahnstange
- 54: Raststufe
- 56: rechter Teilabschnitt
- 58: linker Teilabschnitt
- 60: Käfig
- 62: Basis
- 64: Schenkel
- 66: Verzahnung
- 68: Sperrklinke
- 70: Rastnase
- 72: Zugfeder
- 74: Walze
- 76: Führungsstange
- 78: Durchbruch
- 80: Linearführung
- 82: Querträger
- 84: Frontseite
- 86: Zusatzgewicht
- 88: Platte, Ballastplatte
- 90: Kipphebel
- 92: Lagerzapfen
- 94: Anschlagstift
- 96: Trägerwelle
- 98: Sensor, Sensoren
- 100: Sensorsignal
- 102: Steuerungseinheit
- 104: Steuersignal

## Patentansprüche

1. Fördervorrichtung (10) zum Stückguttransport auf einer sich in einer Förderrichtung (14) bewegenden Auflage (16), welche durch ein Zugtrum (18) mindestens eines endlos umlaufenden Zugmittels (20) bereitgestellt ist, welches mindestens eine Zugmittel (20) ein gegen die Förderrichtung (14) und unterhalb der Auflage (16) zurücklaufendes Leertrum (26) mit einer dort angeordneten und einen Durchhang des Leertrums (26) regulierenden Spannvorrichtung (32) aufweist, welche Spannvorrichtung (32) eine Aufhängung (34) und eine der Aufhängung (34) zugeordnete und entlang eines Verstellweges (36) beweglich gelagerte Spanneinheit (38) mit einem Kontaktelement (40) umfasst, welches Kontaktelelement (40) mit dem Leertrum (26) in Kontakt steht, wobei das Leertrum (26) unter Einwirkung der Gewichtskraft (44) der beweglich gelagerten Spanneinheit (38) vorgespannt wird, wobei für das Vorspannen mehr als 20%, bevorzugt mehr als 50%, noch bevorzugter mehr als 70% der Kraft von der Gewichtskraft (44) der Spanneinheit (38) rühren, und welcher Spanneinheit (38) ein Feststellungsmechanismus (46) zur lösbaren Blockade eines Rückhubs der Spanneinheit (38) entlang des Verstellweges (36) entgegen der Richtung zumindest einer Komponente der Gewichtskraft (44) zugeordnet ist.

2. Fördervorrichtung (10) nach Anspruch 1, bei welcher der Verstellweg (36), um den die Spanneinheit (38) bewegt werden kann, in etwa parallel zur Wirkrichtung der Schwerkraft (44) verläuft.

3. Fördervorrichtung (10) nach Anspruch 1 oder 2, bei der das Kontaktelement (40) eine Gleitfläche zur gleitenden Führung des Zugmittels (20) im Bereich des Leertrums (26) aufweist.

4. Fördervorrichtung (10) nach Anspruch 1 oder 2, bei der das Kontaktelement (40) durch ein im Bereich der Spanneinheit (38) drehbar gelagertes Rotationselement gebildet ist, auf dem das Zugmittel (20) mit seinem Leertrum (26) wälzend geführt ist.

5. Fördervorrichtung (10) nach einem der Ansprüche 1 bis 4, bei der eine Spannwirkung der Spannvorrichtung (32) durch Variation der Gewichte der Spanneinheit (38) und/oder des Kontaktelements (40) beeinflussbar ist.

6. Fördervorrichtung (10) nach Anspruch 5, bei der eine Spannwirkung der Spannvorrichtung (32) durch Anbringung von Zusatzgewichten (86) an der Spanneinheit (38) veränderlich ist.

7. Fördervorrichtung (10) nach einem der Ansprüche 1 bis 6, bei welcher der Feststellungsmechanismus (46) einen Rastmechanismus (48) umfasst, der einen Hub entlang des Verstellweges (36) in Richtung der Schwerkraft (44) zulässt und der einen Rückhub in Richtung entgegen der Schwerkraft (44) blockiert.

8. Fördervorrichtung (10) nach Anspruch 7, bei welcher der Rastmechanismus (48) mindestens eine Sperrklinke (68) umfasst, die mit einer Verzahnung (66) einer Zahnstange (52) zusammenwirkt und dort rastend eingreift, wobei eine rastende Hubbewegung entlang des Verstellweges (36) in Richtung der Schwerkraft (44) ermöglicht ist und ein Rückhub in Richtung entgegen der Schwerkraft (44) blockiert ist.

9. Fördervorrichtung (10) nach einem der Ansprüche 1 bis 8, bei der ein sich durch Kettenlängung einstellender vertikaler Hub des Kontaktelementes (40) von einem initialen Nullpunkt mittels einer geeigneten Sensorik kontinuierlich gemessen wird.

10. Verfahren zum Fördern von Stückgut (12) auf einer sich in einer Förderrichtung (14) bewegenden Auflage (16) in einer Transportebene mit den folgenden Schritten:
- Rückführen der Auflage (16) unterhalb der Transportebene,
- Beschweren und dadurch Spannen der rückgeführten Auflage (16) mit einem Kontaktelement (40) und wahlweise mit weiteren, mit dem Kontaktelement (40) verbundenen Teilen,
- wobei die auf die Auflage (16) durch das Kontaktelement (40) ausgeübte Spannkraft zu einem Anteil von mindestens 20% durch Gewichtskraft (44) gebildet ist,
- Einrasten oder auf andere Weise Festlegen des Kontaktelements (40) oder eines weiteren, mit dem Kontaktelement (40) verbundenen Teils, entlang einer Führung.

11. Verfahren nach Anspruch 10, bei dem die auf die rückgeführte Auflage (16) durch das Kontaktelement (40) ausgeübte Spannkraft im Wesentlichen auf der Wirkung der Gewichtskraft (44) beruht.

12. Verfahren nach einem der Ansprüche 9 bis **11,** bei dem ein Rückhub des Kontaktelements (40) in einer Richtung entgegengesetzt zur Wirkrichtung der Gewichtskraft (40) blockiert wird.

13. Verfahren nach einem der Ansprüche 9 bis 12, bei dem eine Spannrichtung der rückgeführten Auflage (16) in etwa parallel zur Wirkrichtung der Schwerkraft (44) verläuft.

14. Verfahren nach einem der Ansprüche 9 bis 13, bei dem die rückgeführte Auflage (16) auf einer Gleitfläche des Kontaktelements (40) gleitend geführt ist.

15. Verfahren nach einem der Ansprüche 9 bis 14, bei dem die rückgeführte Auflage (16) auf einem das Kontaktelement (40) bildenden Rotationselement wälzend geführt ist.

16. Verfahren nach einem der Ansprüche 9 bis 15, bei dem eine auf die rückgeführte Auflage (16) einwirkende Spannkraft durch Variation von Gewichten spannender Komponenten und/oder durch Einsatz von Zusatzgewichten (86) variiert werden kann.
